# EUROPEAN PATENT SPECIFICATION

(11) **EP 2 670 796 B1**
(45) Date of publication and mention of the grant of the patent: **16.05.2018**
(21) Application number: 12707408.6
(22) Date of filing: 02.02.2012
(51) Int. Cl.: C08J 7/04, G02B 1/10, C09D 7/12, B82Y 20/00, B82Y 30/00, C01B 33/12, C08G 18/67, C08F 283/06, C08F 290/06, C08F 292/00, C09D 151/08, C09D 151/10, C09D 175/16

(54) **HARDCOAT**
HARTBESCHICHTUNG
REVÊTEMENT DUR

(30) Priority: 03.02.2011 US 201161439153 P
(43) Date of publication of application: 11.12.2013
(73) Proprietor: 3M Innovative Properties Company, St. Paul, MN 55133-3427 (US)
(72) Inventor: SUGIYAMA, Naota, Tokyo 158-8583 (JP); KOLB, Brant, U., Saint Paul, MN 55133-3427 (US); CORCORAN, Lindsay, E., Liberty Township, Ohio 45044 (US); KOMATSUZAKI, Takashi, Tokyo 158-8583 (JP); UEDA, Saori, Tokyo 158-8583 (JP); HATTORI, Jiro, Tokyo 158-8583 (JP); TAKAMATSU, Yorinobu, Tokyo 158-8583 (JP)
(74) Representative: Herzog, Fiesser & Partner Patentanwälte PartG mbB
(86) International application number: PCT/US2012/023617
(87) International publication number: WO 2012/106507

(56) References cited:
- EP-A2- 0 974 605
- WO-A1-03/044099
- WO-A2-03/027034
- US-A1- 2004 058 614
- US-A1- 2006 147 674
- US-A1- 2008 124 555
- US-B1- 6 284 819
- MOAYED ET AL: "Synthesis of a latex with bimodal particle size distribution for coating applications using acrylic monomers", PROGRESS IN ORGANIC COATINGS, ELSEVIER BV, NL, vol. 60, no. 4, 1 November 2007 (2007-11-01), pages 312-319, XP022324388, ISSN: 0300-9440, DOI: 10.1016/J.PORGCOAT.2007.07.023
- LINDA Y L WU ET AL: "Synthesis and Characterization of Transparent Hydrophobic Sol-Gel Hard Coatings", JOURNAL OF SOL-GEL SCIENCE AND TECHNOLOGY, KLUWER ACADEMIC PUBLISHERS, BO, vol. 38, no. 1, 21 April 2006 (2006-04-21) , pages 85-89, XP019402381, ISSN: 1573-4846, DOI: 10.1007/S10971-006-5917-1
- M. SUZUKI ET AL: "Verification of a model for estimating the void fraction in a three-component randomly packed bed", POWDER TECHNOLOGY, vol. 43, no. 2, 1 July 1985 (1985-07-01), pages 147-153, XP55023938, ISSN: 0032-5910, DOI: 10.1016/0032-5910(85)87006-6
- DATABASE WPI Week 200347, Derwent Publications Ltd., London, GB; AN 2003-497964 -& JP 2003 034761 A (NIPPON ARC KK) 07 February 2003
- DATABASE WPI Week 200614, Derwent Publications Ltd., London, GB; AN 2006-130827 -& JP 2006 036835 A (JSR CORP) 09 February 2006
- DATABASE WPI Week 200754, Derwent Publications Ltd., London, GB; AN 2007-551637 -& JP 2007 145965 A (TOSHIBA SILICONE KK) 14 June 2007
- DATABASE WPI Week 200782, Derwent Publications Ltd., London, GB; AN 2007-888311 -& JP 2007 234101 A (ASAHI DENKA KOGYO KK) 13 September 2007

## Description

### Cross Reference To Related Application

This application claims the benefit of U.S. Provisional Patent Application No. 61/439153, filed February 3, 2011.

### Background

A variety of coatings and films are used to protect optical displays such as cathode ray tube (CRT) and light emitting diode (LED) displays (e.g., U.S. Pat. Pub. No. 20060147674).

Additional options for protecting displays are desired, particularly those having relatively excellent hardness and optical properties at the same time.

### Summary

The subject matter of the present invention is defined in claims 1-11 as attached. Embodiments described herein which are not covered by the claims merely serve to illustrate the technical context of the present invention.

In one aspect, the present disclosure provides a hardcoat comprising a binder and a mixture of nanoparticles in a range from 60 wt.% to 90 wt. %, based on the total weight of the hardcoat, wherein 10 wt. % to 50 wt. % of the nanoparticles have an average particle diameter in a range from 2 nm to 200 nm and 50 wt. % to 90 wt. % of the nanoparticles have an average particle diameter in a range from 60 nm to 400 nm, and wherein the ratio of average particle diameters of nanoparticles having an average particle diameter in the range from 2 nm to 200 nm to average particle diameters of nanoparticles having an average particle diameter in the range from 60 nm to 400 nm is in a range from 1:2 to 1:200, wherein the mixture of inorganic nanoparticles includes a combination of particle sizes selected from the group consisting of 5 nm/190 nm, 5 nm/75 nm, 20 nm/190 nm, 20 nm/75 nm, and 75 nm/190 nm.

In one aspect, the present disclosure provides an article comprising a substrate having a surface, and a hardcoat layer disposed on the surface of the substrate, wherein the hardcoat layer comprises a hardcoat described herein.

The present disclosure provides a hardcoat precursor comprising a binder and a mixture of nanoparticles in a range from 60 wt. % to 90 wt. %, based on the total weight of the hardcoat precursor, wherein 10 wt. % to 50 wt. % of the nanoparticles have an average particle diameter in a range from 2 nm to 200 nm and 50 wt. % to 90 wt. % of the nanoparticles have an average particle diameter in a range from 60 nm to 400 nm, and wherein the ratio of average particle diameters of nanoparticles having an average particle diameter in the range from 2 nm to 200 nm to average particle diameters of nanoparticles having an average particle diameter in the range from 60 nm to 400 nm is in a range from 1:2 to 1:200, wherein the mixture of inorganic nanoparticles includes a combination of particle sizes selected from the group consisting of 5 nm/190 nm, 5 nm/75 nm, 20 nm/190 nm, 20 nm/75 nm, and 75 nm/190 nm.

Embodiments of hardcoats described herein typically have good transparency and hardness, and are useful, for example, for optical displays (e.g., cathode ray tube (CRT), light emitting diode (LED) displays), and of devices such as personal digital assistants (PDAs), cell phones, liquid crystal display (LCD) panels, touch-sensitive screens and removable computer screens; and for body of such devices.

The Figures and the detailed description which follow more particularly exemplify these embodiments.

### Brief Description of the Drawings

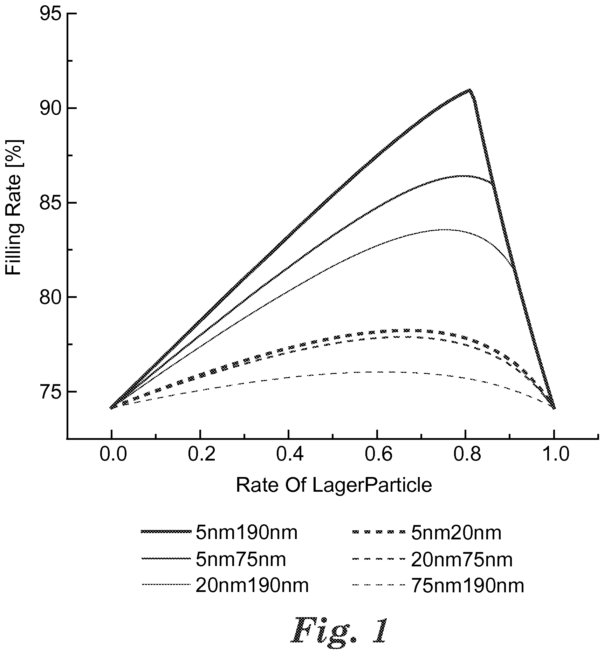

Fig. 1 is a graph that depicts the simulation result between the combination of the particle size (larger particles group/smaller particles group), and the weight ratio of the smaller particles group and the larger particles group
example, under the trade designation "UX5000" from Nippon Kayaku Co., Ltd., Tokyo, Japan), urethane acrylate (available, for example, under the trade designations "UV1700B " from Nippon Synthetic Chemical Industry Co., Ltd., Osaka, Japan ; and "UB6300B" from Nippon Synthetic Chemical Industry Co., Ltd., Osaka, Japan), trimethyl hydroxyl di-isocyanate/hydroxy ethyl acrylate (TMHDI/HEA, available, for example, under the trade designation "EB4858" from Daicel Cytech Company Ltd. ,Tokyo, Japan), polyethylene oxide (PEO) modified bis-A diacrylate (available, for example, under the trade designation "R551" from Nippon Kayaku Co., Ltd., Tokyo, Japan), PEO modified bis-A epoxyacrylate (available, for example, under the trade designation "3002M" from Kyoeishi Chemical Co., Ltd., Osaka, Japan), silane based UV curable resin (available, for example, under the trade designation "SK501M" from Nagase ChemteX Corporation, Osaka, Japan), and 2-phenoxyethyl methacrylate (available, for example, under the trade designation "SR340" from Sartomer Company); and the mixture of thereof. Use, for example, of in the range from 1.25 to 20 wt.% of 2-phenoxyethyl methacrylate has been observed to improve adhesion to polycarbonate. Use of di-functional resins(e.g., PEO modified bis-A diacrylate ("R551") and trimethyl hydroxyl di-isocyanate/hydroxy ethyl acrylate (TMHDI/HEA) (available, for example, under the trade designation "EB4858" from Daicel Cytech Company Ltd.) has been observed to simultaneously improve the hardness, impact resistance, and flexibility of the hardcoat. In some embodiments, it may be desirable to use curable monomers or oligomers capable of forming three-dimensional structure.

The amount of the binder in the precursor to form the hardcoat is typically sufficient to provide the hardcoat with 5 wt.% to 60 wt. % (in some embodiments, 10 wt.% to 40 wt %, or even 15 wt.% to 30 wt %) binder, based on the total weight of the hardcoat.

Optionally, the hardcoat precursor further comprises crosslinking agents. Exemplary crosslinking agents include poly (meth)acryl monomers selected from the group consisting of (a) di(meth)acryl containing compounds such as 1,3-butylene glycol diacrylate, 1,4-butanediol diacrylate, 1,6-hexanediol diacrylate, 1,6-hexanediol monoacrylate monomethacrylate, ethylene glycol diacrylate, alkoxylated aliphatic diacrylate, alkoxylated cyclohexane dimethanol diacrylate, alkoxylated hexanediol diacrylate, alkoxylated neopentyl glycol diacrylate, caprolactone modified neopentylglycol hydroxypivalate diacrylate, caprolactone modified neopentylglycol hydroxypivalate diacrylate, cyclohexanedimethanol diacrylate, diethylene glycol diacrylate, dipropylene glycol diacrylate, ethoxylated (10) bisphenol A diacrylate, ethoxylated (3) bisphenol A diacrylate, ethoxylated (30) bisphenol A diacrylate, ethoxylated (4) bisphenol A diacrylate, hydroxypivalaldehyde modified trimethylolpropane diacrylate, neopentyl glycol diacrylate, polyethylene glycol (200) diacrylate, polyethylene glycol (400) diacrylate, polyethylene glycol (600) diacrylate, propoxylated neopentyl glycol diacrylate, tetraethylene glycol diacrylate, tricyclodecanedimethanol diacrylate, triethylene glycol diacrylate, tripropylene glycol diacrylate; (b) tri(meth)acryl containing compounds such as glycerol triacrylate, trimethylolpropane triacrylate, ethoxylated triacrylates (e.g., ethoxylated (3) trimethylolpropane triacrylate, ethoxylated (6) trimethylolpropane triacrylate, ethoxylated (9) trimethylolpropane triacrylate, ethoxylated (20) trimethylolpropane triacrylate), pentaerythritol triacrylate, propoxylated triacrylates (e.g., propoxylated (3) glyceryl triacrylate, propoxylated (5.5) glyceryl triacrylate, propoxylated (3) trimethylolpropane triacrylate, propoxylated (6) trimethylolpropane triacrylate), trimethylolpropane triacrylate, tris(2-hydroxyethyl)isocyanurate triacrylate; (c) higher functionality (meth)acryl containing compounds such as ditrimethylolpropane tetraacrylate, dipentaerythritol pentaacrylate, ethoxylated (4) pentaerythritol tetraacrylate, pentaerythritol tetraacrylate, caprolactone modified dipentaerythritol hexaacrylate; (d) oligomeric (meth)acryl compounds such as, for example, urethane acrylates, polyester acrylates, epoxy acrylates; polyacrylamide analogues of the foregoing; and combinations thereof. Such materials are commercially available, including at least some that are available, for example, from Sartomer Company; UCB Chemicals Corporation, Smyrna, GA; and Aldrich Chemical Company, Milwaukee, WI. Other useful (meth)acrylate materials include hydantoin moiety-containing poly(meth)acrylates, for example, as reported in U.S. Pat. No. 4,262,072 (Wendling et al.).

A preferred crosslinking agent comprises at least three (meth)acrylate functional groups. Preferred commercially available crosslinking agents include those available from Sartomer Company such as trimethylolpropane triacrylate (TMPTA) (available under the trade designation "SR351"), pentaerythritol tri/tetraacrylate (PETA) (available under the trade designations "SR444" and "SR295"), and pentraerythritol pentaacrylate (available under the trade designation "SR399"). Further, mixtures of multifunctional and lower functional acrylates, such as a mixture of PETA and phenoxyethyl acrylate (PEA), available from Sartomer Company under the trade designation "SR399", may also be utilized. These preferred crosslinking agents may be used as the curable monomers or oligomers.

The mixture of nanoparticles present in the hardcoat is in a range from 60 wt.% to 90 wt. %, or even about 70 wt. % to about 85 wt. %, based on the total weight of the hardcoat. The mixture of the nanoparticles includes 10 wt.% to 50 wt. % of the nanoparticles having an average particle diameter in the range from 2 nm to 200 nm (smaller particles group) and 50 wt.% to 90 wt. % of the nanoparticles having an average particle diameter in the range from 60 nm to 400 nm (larger particles group).

The average diameter of nanoparticles is measured with transmission electron microscopy (TEM) using commonly employed techniques in the art. For measuring the average particle size of nanoparticles, sol samples can be prepared for TEM imaging by placing a drop of the sol sample onto a 400 mesh copper TEM grid with an ultra-thin carbon substrate on top of a mesh of lacey carbon (available from Ted Pella Inc., Redding, CA). Part of the drop can be removed by touching the side or bottom of the grid with filter paper. The remainder can be allowed to dry. This allows the particles to rest on the ultra-thin carbon substrate and to be imaged with the least interference from a substrate. Then, TEM images can be recorded at multiple locations across the grid. Enough images are recorded to allow sizing of 500 to 1000 particles. The average diameters of the nanoparticles can then be calculated based on the particle size measurements for each sample. TEM images can be obtained using a high resolution transmission electron microscope (available under the trade designation "Hitachi H-9000" from Hitachi) operating at 300KV (with a LaB₆ source). Images can be recorded using a camera (e.g., Model No. 895, 2k X 2k chip available under the trade designation "GATAN ULTRASCAN CCD" from Gatan, Inc., Pleasanton, CA). Images can be taken at a magnification of 50,000X and 100,000X. For some samples, images may be taken at a magnification of 300,000X.

Typically, the nanoparticles are inorganic particles. Examples of the inorganic particles include metal oxides such as alumina, tin oxides, antimony oxides, silica (SiO, SiO₂), zirconia, titania, ferrite, mixtures thereof, or mixed oxides thereof; metal vanadates, metal tungstates, metal phosphates, metal nitrates, metal sulphates, and metal carbides.

As used herein "smaller particles group" means nanoparticles having an average particle diameter in the range from 2 nm to 200 nm, and "larger particles group" means nanoparticles having an average particle diameter in the range from 60 nm to 400 nm.

The average particle diameter of the smaller particles group is in the range from 2 nm to 200 nm. Preferably, it may be from 2 nm to 150 nm, 3 nm to 120 nm, or 5 nm to 100 nm. The average particle diameter of the larger particles group is in the range from 60 nm to 400 nm. Preferably, it may be from 65 nm to 350 nm, 70 nm to 300 nm, or 75 nm to 200 nm.

The mixture of nanoparticles includes at least two different size distributions of nanoparticles. Other than the size distribution, the nanoparticles may be the same or different (e.g., compositional, including surface modified or unmodified). In some embodiments, the ratio of average particle diameters of nanoparticles having an average particle diameter in the range from 2 nm to 200 nm to average particle diameters of nanoparticles having an average particle diameter in the range from 60 nm to 400 nm is in a range from 1:2.5 to 1:100, or even from 1:2.5 to 1:25. In accordance with the invention the combination of the particle size includes the combination of 5 nm/190 nm, 5 nm/75 nm, 20 nm/190 nm, 20 nm/75 nm and 75 nm/190 nm. By using the mixture of different sized nanoparticles, larger amount of nanoparticles can be added to the hardcoat.

Further, selection, for example, of various types, amounts, sizes, and ratios of particles may affect the transparency (including haze) and hardness. In some embodiments relatively high desired transparency and hardness can be obtained in the same hardcoat.

The weight ratio (%) of the smaller particles group and the larger particles group can be selected depending on the particle size used or the combination of the particle size used. Preferable weight ratio can be also selected depending on the particle size used or the combination of the particle size used, for example, it may be selected from simulation between the combination of the particle size (larger particles group/smaller particles group), and the weight ratio of the smaller particles group and the larger particles group with software obtained under the trade designation "CALVOLD 2" (see also "Verification of a Model for Estimating the Void Fraction in a Three-Component Randomly Packed Bed," M. Suzuki and T. Oshima: Powder Technol., 43,147-153(1985)). The simulation examples are shown in the Fig. 1. From the simulation, examples of the preferable combination may be from about 55/45 to about 87/13 or from about 60/40 to about 85/15 for the combination of 5 nm/190 nm; from about 55/45 to about 90/10 or from about 65/35 to about 85/15 for the combination of 5 nm/75 nm; from about 55/45 to about 90/10 for the combination of 20 nm/190 nm; from about 50/50 to about 80/20 for the combination of 5 nm/20 nm; from about 50/50 to about 78/22 for the combination of 20 nm/75 nm; and from about 50/50 to about 73/27 for the combination of 75 nm/190 nm.

In some embodiments, a larger fill amount of nanoparticles can be incorporated into a hardcoat by using preferable sizes and combinations of the nanoparticles, which may allow tailoring the resulting transparency and hardness of the hardcoat.

Typically, the thickness of the hardcoat is in a range from 80 nanometers to 30 micrometers (in some embodiments, 200 nanometers to 20 micrometers, or even 1 micrometer to 10 micrometers). Typically, by using the mixture of different sized nanoparticles, thicker and harder hardcoat layers can be obtained.

Optionally, the nanoparticles may be modified with a surface treatment agent. In general a surface treatment agent has a first end that will attach to the particle surface (covalently, ionically or through strong physisorption) and a second end that imparts compatibility of the particle with the resin and/or reacts with resin during curing. Examples of surface treatment agents include alcohols, amines, carboxylic acids, sulfonic acids, phosphonic acids, silanes, and titanates. The preferred type of treatment agent is determined, in part, by the chemical nature of the nanoparticle surface. Silanes are preferred for silica and other siliceous fillers. Silanes and carboxylic acids are preferred for metal oxides. The surface modification can be done either subsequent to mixing with the monomers or after mixing. When silanes are employed, reaction of the silanes with the nanoparticle surface is preferred prior to incorporation into the binder. The required amount of surface treatment agent is dependent upon several factors such as particle size, particle type, surface treatment agent molecular weight, and surface treatment agent type. In general, it is preferred that about a monolayer of surface treatment agent be attached to the surface of the particle. The attachment procedure or reaction conditions required also depend on the surface treatment agent used. When employing silanes, surface treatment at elevated temperatures under acidic or basic conditions for about 1 hour to 24 hours is preferred. Surface treatment agents such as carboxylic acids do not usually require elevated temperatures or extended time.

Representative embodiments of surface treatment agents include compounds such as isooctyl trimethoxy-silane, N-(3-triethoxysilylpropyl) methoxyethoxyethoxyethyl carbamate, polyalkyleneoxide alkoxysilane (available, for example, under the trade designation "SILQUEST A1230" from Momentive Specialty Chemicals, Inc. Columbus, OH), N-(3-triethoxysilylpropyl) methoxyethoxyethoxyethyl carbamate, 3-(methacryloyloxy)propyltrimethoxysilane, 3-(Acryloxypropyl)trimethoxysilane, 3-(methacryloyloxy)propyltriethoxysilane, 3-(methacryloyloxy) propylmethyldimethoxysilane, 3 -(acryloyloxypropyl)methyldimethoxysilane, 3 -(methacryloyloxy)propyldimethylethoxysilane, 3 -(methacryloyloxy) propyldimethylethoxysilane, vinyldimethylethoxysilane, phenyltrimethoxysilane, n-octyltrimethoxysilane, dodecyltrimethoxysilane, octadecyltrimethoxysilane, propyltrimethoxysilane, hexyltrimethoxysilane, vinylmethyldiacetoxysilane, vinylmethyldiethoxysilane, vinyltriacetoxysilane, vinyltriethoxysilane, vinyltriisopropoxysilane, vinyltrimethoxysilane, vinyltriphenoxysilane, vinyltri-t-butoxysilane, vinyltris-isobutoxysilane, vinyltriisopropenoxysilane, vinyltris(2-methoxyethoxy)silane, styrylethyltrimethoxysilane, mercaptopropyltrimethoxysilane, 3-glycidoxypropyltrimethoxysilane, acrylic acid, methacrylic acid, oleic acid, stearic acid, dodecanoic acid, 2-[2-(2-methoxyethoxy)ethoxy]acetic acid (MEEAA), beta-carboxyethylacrylate, 2-(2-methoxyethoxy)acetic acid, methoxyphenyl acetic acid, and mixtures thereof.

Optionally, the hardcoat may further include known additives such as a UV absorbing agent, a UV reflective agent, an anti-fog agent, an antistatic agent, an easy-clean agent such as an anti-finger printing agent, an anti-oil agent, an anti-lint agent, or an anti-smudge agent, or other agents adding an easy-cleaning function.

Addition of hexafluoropropylene oxide urethane acrylate (HFPO) or modified HFPO to the hardcoat has been observed to improve easy-clean (e.g., anti-finger printing, anti-oil, anti-lint and/or anti-smudge functions of the hardcoat. Exemplary amounts HFPO and modified HFPO include in a range from 0.01 wt.% to 5.0 wt.%(in some embodiments, 0.05 wt.% to 1.5 wt.%, or 0.1 wt.% to 0.5 wt.%), based on the total weight of the hardcoat.

Inclusion of silicon polyether acrylate (available, for example, under the trade designation "TEGORAD 2250" from Evonic Goldschmidt GmbH, Essen, Germany) in the hardcoat has also been observed to improve easy-clean function of the hardcoat. Exemplary amounts of silicon polyether acrylate include in a range from 0.01 wt.% to 5.0 wt.% (in some embodiments, 0.05 wt.% to 1.5 wt.%, or even 0.1 wt.% to 0.5 wt.%), based on the total weight of the hardcoat.

The specified components of the hardcoat precursor can be combined and processed into a hardcoat as is generally known in the art. For example, the following processes may be used. Two or more different sized nanoparticles sol with or without modification are mixed with curable monomers and/or oligomers in solvent with an initiator, which is adjusted to a desired weight % (in solid) by adding the solvent, to furnish a hardcoat precursor. No-solvent can be used depending on the curable monomers and/or oligomers used. The hardcoat precursor can be coated onto the substrate by known coating process such as bar coating, dip coating, spin coating, capillary coating, spray coating, gravure coating, or screen printing. After drying, the coated hardcoat precursor can be cured with known polymerization methods such as ultraviolet (UV) or thermal polymerization.

If the nanoparticles are surface modified, the hardcoat precursor can be made, for example, as follows. Inhibitor and surface modification agent is added to solvent in a vessel (e.g., in a glass jar), and the resulting mixture added to an aqueous solution having the nanoparticles dispersed therein, followed by stirring. The vessel is sealed and placed in an oven, for example, at an elevated temperature (e.g., 80°C) for several hours (e.g., 16 hours). The water is then removed from the solution by using, for example, a rotary evaporator at elevated temperature (e.g., 60°C). A solvent is charged into the solution, and then remaining water is removed from the solution by evaporation. It may be desired to repeat the latter a couple of times. The concentration of the nanoparticles can be adjusted to the desired weight % by adjusting the solvent level.

Hardcoat described herein are useful, for example, for optical displays for optical displays (e.g., cathode ray tube (CRT), light emitting diode (LED) displays), plastic cards, lenses or body of cameras, fans, door knobs, tap handles, mirrors, and home electronics such as cleaners or washing machines, and of devices such as personal digital assistants (PDAs), cell phones, liquid crystal display (LCD) panels, touch-sensitive screens and removable computer screens; and for body of such devices. Further, the hardcoat described herein may be useful, for example, for furniture, doors and windows, toilet bowls and bath tubs, vehicle interior/exterior, lenses (of a camera or glasses), or solar panels.

Exemplary substrates for having the hardcoat described herein thereon include a film, a polymer plate, a sheet glass, and a metal sheet. The film may be transparent or non-transparent. As used herein "transparent" refers that total transmittance is 90% or more and "untransparent" refers that total transmittance is not more than 90%. Exemplary the film includes those made of polycarbonate, poly(meth)acrylate (e.g., polymethyl methacrylate (PMMA), polyolefins (e.g., polypropylene (PP)), polyurethane, polyesters (e.g., polyethylene terephthalate (PET)), polyamides, polyimides, phenolic resins, cellulose diacetate, cellulose triacetate, polystyrene, styrene-acrylonitrile copolymers, acrylonitrile butadiene styrene copolymer (ABS), epoxies, polyethylene, polyacetate and vinyl chloride, or glass. The polymer plate may be transparent or non-transparent. Exemplary the polymer plate includes those made of polycarbonate (PC), polymethyl methacrylate (PMMA), styrene-acrylonitrile copolymers, acrylonitrile butadiene styrene copolymer (ABS), a blend of PC and PMMA, or a laminate of PC and PMMA. The metal sheet may be flexible or rigid. As used herein "flexible metal sheet" refers to metal sheets that can undergo mechanical stresses, such as bending or stretching and the like, without significant irreversible change, and "rigid metal sheet" refers to metal sheets that cannot undergo mechanical stresses, such as bending or stretching and the like, without significant irreversible change. Exemplary flexible metal sheets include those made of aluminum. Exemplary rigid metal sheets include those made of aluminum, nickel, nickel-chrome, and stainless steel. When the metal sheets are used, it may be desirable to apply a primer layer between the hardcoat and the substrate.

Typically the thickness of the film substrate is in a range from 5 micrometers to 500 micrometers. For the polymer plate as the substrate, the typical thickness is in a range from 0.5 mm to 10 cm (in some embodiments, from 0.5 mm to 5 mm, or even 0.5 mm to 3 mm), for the sheet glass or the metal sheet as the substrate, the typical thickness is in a range from 5 micrometers to 500 micrometers, or 0.5 mm to 10 cm (in some embodiments, from 0.5 mm to 5 mm, or even 0.5 mm to 3 mm), although thickness outside of these ranges may also useful.

Hardcoats described herein may be disposed on more than one surface of the substrate, for those substrates have more than one surface. Also, more than one hardcoat layer may be applied to a surface. Typically, the thickness of hardcoat layers described herein are in a range from 80 nanometers to 30 micrometers (in some embodiments, 200 nanometers to 20 micrometers, or even 1 micrometer to 10 micrometers), although thickness outside of these ranges may also be useful.

In some embodiments, the article may further comprise a functional layer such as primer layer between the hardcoat layer and the substrate. Optionally, an adhesive layer may be applied on the opposite surface of the substrate from the hardcoat layer. Exemplary adhesives are known in the art, including acrylic adhesive, urethane adhesive, silicone adhesive, polyester adhesive, and rubber adhesive.

Further, if an adhesive layer is present, optionally a linear (e.g., release liner) can be included over the adhesive layer. Release liners are known in the art and include paper and a polymer sheet.

The hardcoat precursor can be prepared by combining components using method known in the art such as adding curable monomers and/or oligomers in solvent (e.g., methyl ethyl ketone (MEK) or 1-methoxy-2-propanol (MP-OH)) with an inhibitor to solvent. In some embodiments, no solvent can be used depending on the curable monomers and/or oligomers used. The hardcoat precursor may further include known additives such as UV absorbing agent, UV reflective agent, anti-fog agent, or antistatic agent.

Techniques for applying the hardcoat precursor (solution) to the surface of the substrate are known in the art and include bar coating, dip coating, spin coating, capillary coating, spray coating, gravure coating and screen printing. The coated hardcoat precursor can be dried and cured by polymerization methods known in the art, including UV or thermal polymerization.

Advantages and embodiments of this invention are further illustrated by the following examples, but the particular materials and amounts thereof recited in these examples, as well as other conditions and details, should not be construed to unduly limit this invention. All parts and percentages are by weight unless otherwise indicated.

### EXAMPLES

### Pencil Hardness Test

The pencil hardness of hardcoats was determined in accordance with JIS K 5600-5-4 (1999), the disclosure of which is incorporated herein by reference, using 500 grams, 750 grams, or 1 kg of weight.

### Optical Tests

The total transmittance (TT) value, the haze value (Haze), the diffuse transmittance (DF) and the parallel transmittance (PT) of hardcoats were measured with a haze meter (obtained under the trade designations "HAZE-GUARD PLUS" from BYK-Gardner GmbH, Tokyo, Japan for Examples 1-39 and Comparative Examples 1-24, and "NDH5000W" from Nippon Denshouku Industries Co., Ltd., Tokyo, Japan for Examples 40 and after and Comparative Example 2 and after. TT is sum of DF and PT.

### Adhesion Test

Adhesion performance was evaluated by across cut test according to JIS K5600, the disclosure of which is incorporated herein by reference, where a 5×5 grid with 1 mm of interval grid and tape (obtained under the trade designation "NICHIBAN" from Nitto Denko Co., Ltd.) was used.

### Bending Test

Bending performance was evaluated as follows. The article of a laminate of the hardcoat and the substrate was pushed against the outer surface of 7.6 cm (3 inch) sized core with the substrate surface, and then the hardcoat surface, which was outer side, was observed after 10 second with keeping the impression. The results are shown in Table 8, below. A "Crack" means that cracking occurred on the hardcoat layer and "No crack" means that cracking was hardly observed on hardcoat layer.

### Impact Resistant Test

The impact resistance of hardcoats was evaluated by fall ball impact test. The hardcoat substrate was placed on stainless table the hardcoat side down. A rigid, chrome sphere (35.8 grams) was allowed to free fall to the bare polycarbonate side from a height of 15 cm. "Crack" means that cracking occurred on the hardcoat layer, and "No crack" means that cracking was hardly observed on hardcoat layer.

### Contact Angle

Water/hexadecan contact angle of the samples was measured by a contact angle meter (obtained under the trade designation "DROPMASTER FACE" from Kyowa Interface Science Co., Ltd., Saitama, Japan). The value of contact angle was calculated from average of 10 times measurements.

### Water Resistance Test

Water resistance was evaluated by immersion into hot water at 50 °C for 3 hours. and then the surface of the hardcoat observed after removal from the water. Changes in the hardcoat are described as "Peeling", "Whitening", and generated "Bubble".

### Environmental Resistance Test

Environmental resistance was evaluated by using accelerated environmental test at 65°C/80% relative humidity for 3 days. "Crack" means that cracking occurred on the hardcoat layer, and "OK" means that cracking was hardly observed on hardcoat layer. The results are shown in Table 11, below.

### Cellulose Haze Test

A hardcoat coating according to the Examples of the invention was allowed to sit for at least than 24 hours to allow to be electrically-charged. 0.35 gram of alpha-cellulose (obtained under the trade designation "C-8002" from Sigma Chemical Company, MO) was applied to the top of the coating. The coated sample was tilted back and forth several times to allow the cellulose to evenly coat the test area. The excess cellulose was then shaken off and the haze of the coating plus cellulose was measured by a haze meter (obtained under the trade designation "HAZE GARD-PLUS" form BYK-Gardner, Columbia, MD). The results are shown in Table 10b, below.

### Anti-fogging Test

Anti-fogging performance was evaluated according to EN186:2001 (E). Duration time (seconds) until the transmittance (TT) of the sample becomes 80% was measured and the result was detected as "Good" for more than 8 seconds and as "No Good" for not more that 8 seconds.

### Scratch Resistance Test

Scratch resistance was evaluated by sand fall test according to JIS T 8147 (2003), where SiC powders fall to the rotating substrate and the optical properties (Haze, TT, DF, and PT) before (initial) and after the sand fall were measured.

### Example 1

A surface modified silica sol ("Sol 1") was prepared as follows. 28.64 grams of 3-methacryloxypropyl-trimethoxysilane (obtained under the trade designation "SILQUEST A174" from Alfa Aesar, Ward Hill, MA) and 0.5 gram of 4-hydroxy- 2,2,6,6-tetramethylpiperidine 1-oxyl (5 wt.%; obtained under the trade designation "PROSTAB" from Aldrich, Milwaukee, WI) was added to 450 grams of 1-methoxy-2-propanol (obtained from Alfa Aesar, Ward Hill, MA), which was added to 400 grams of SiO₂ sol (5 nm diameter; obtained under the trade designation "NALCO 2326" from Nalco Company, Naperville, IL) in a glass jar with stirring at room temperature for 10 minutes. The jar was sealed and placed in an oven at 80°C for 16 hours. The water was removed from the resultant solution with a rotary evaporator at 60°C until the solid wt.% of the solution was close to 45 wt.%. 200 grams of 1-methoxy-2-propanol was charged into the resultant solution, and then remaining water was removed by using the rotary evaporator at 60°C. This latter step was repeated for a second time to further remove water from the solution. Finally, the concentration of total SiO₂ nanoparticles was adjusted to 45 wt. % by adding 1-Methoxy-2-propanol to result in a SiO₂ sol containing surface modified SiO₂ nanoparticles with an average size of 5 nm.

A surface modified silica sol ("Sol 2") was prepared as follows. SiO₂ sol (75 nm diameter; obtained under the trade designation "NALCO 2329" from Nalco Company) were modified in the same manner as is the case in 5 nm nanoparticles described above except that 5.95 grams of 3-methacryloxypropyl-trimethoxysilane ("SILQUEST A174") and 0.5 gram of 4-hydroxy-2,2,6,6-tetramethylpiperidine 1-oxyl (5 wt. %; "PROSTAB") were used, resulting in a SiO₂ sol containing surface modified SiO₂ nanoparticles with an average size of 75 nm.

4.09 grams of the Sol 1 and 13.69 grams of Sol 2 were mixed with 2 grams of pentraerythritol pentaacrylate (obtained under the trade designation "SR399" from Sartomer Company, Exton, PA) and 0.1 gram of 1-hydroxy-cyclohexyl-phenyl-ketone (obtained under the trade designation "IRGACURE 184" from Ciba Specialty Chemicals, Tarrytown, NY), then adjusted to 40 wt.% in solid by adding 1-methoxy-2-propanol to provide a hardcoat precursor (solution).

A 100 mm x 53 mm x 2 mm polymethylmetacrylate (PMMA) sheet (obtained under the trade designation "ACRYLITE-L" from Mitsubishi Rayon, Minato-ku, Tokyo) was fixed on a stainless steel table with level adjustment, and then the hardcoat precursor was coated on the PMMA sheet by bar coating with Meyer Rod # 4. After drying at room temperature for 15 minutes, the dried sample was placed in box purged by nitrogen under oxygen concentration of 50 ppm, and irradiated by ultraviolet (UV) (253.7 nm) light for 15 minutes using a 25 watt gemicidal lamp (obtained under the trade designation "GERMICIDAL LAMP- G25T8" from Sankyo Denki, Kanagawa, Japan). The thickness of the resulting hardcoat is provided in Table 1, below.

**Table 1**

| | Weight % of Nanoparticles in Hardcoat, wt.% | Weight % of Binder in Hardcoat | Thickness of Hardcoat, micrometer | Meyer Rod | Pencil hardness of Hardcoat | | Transmittance of hardcoat TT, % | Haze of Hardcoat, % |
|---|---|---|---|---|---|---|---|---|
| | | | | | using 500g load | using 750g load | | |
| Ex 1 | 80 | 20.0 | 3.66 | #4 | 5H | - | - | - |
| Ex 2 | 85 | 15.0 | 3.66 | #4 | 6H | - | 93.2 | 0.59 |
| Ex 3 | 90 | 10.0 | 3.66 | #4 | 5H | - | - | - |
| Ex 4 | 85 | 15.0 | 3.66 | #4 | 5H | - | 93.1 | 0.73 |
| Ex 5 | 85 | 15.0 | 3.66 | #4 | - | - | 92.6 | 14.1 |
| Ex 6 | 85 | 15.0 | 3.66 | #4 | - | - | 87.6 | 37.9 |
| Ex 7 | 85 | 15.0 | 14.63 | #16 | 7H | - | 93.1 | 0.54 |
| Ex 8 | 70 | 30.0 | 3.66 | #4 | 8H | 8H | 91.2 | 1.15 |
| Ex 9 | 70 | 30.0 | 3.66 | #4 | 7H | - | 92.4 | 0.5 |
| Ex 10 | 70 | 30.0 | 3.66 | #4 | 7H | 7H | 92.2 | 0.46 |
| Ex 11 | 70 | 30.0 | 9.14 | #10 | 8H | 7H | 94.5 | 0.54 |
| Ex 12 | 75 | 25.0 | 3.66 | #4 | 7H | - | 94.6 | 0.77 |
| Ex 13 | 75 | 25.0 | 9.14 | #10 | 8H | 7H | 94.5 | 0.98 |
| Ex 14 | 80 | 20.0 | 3.66 | #4 | - | - | 91.2 | 42.9 |
| Ex 15 | 80 | 20.0 | 14.63 | #16 | - | - | 81.7 | 84.4 |
| Ex 16 | 80 | 20.0 | 3.66 | #4 | - | - | 91.2 | 15.7 |
| Ex 17 | 70 | 30.0 | 3.66 | #4 | 6H | - | 92.3 | 0.37 |
| Ex 18 | 70 | 30.0 | 3.66 | #4 | 5H | - | 92.4 | 0.25 |

### Examples 2-18

Examples 2-15, 17, and 18 were prepared as described for Example 1, except that the materials used, material ratios were varied as shown in Table 2 (below) and Meyer rods as described in Table 1 (above) were used. Example 16 was prepared as described for Examples 2-15, 17, and 18, except that three different sized Sol (Sol 1/Sol 4/ Sol 3 = 5 nm/20 nm/190 nm) were used as shown in Table 2, below.

**Table 2**

| | Weight of "SILQUEST A174" Material added to Sol, g | | | | Weight of SiO₂ Sol added to Sol, g | | | | Weight of Sol in Hardcoat Precursor | | | | Weight of Binder ("SR399") in hardcoat precursor, g) | Weight Ratio of Sol1/Sol2/Sol3/Sol4 | | | |
|---|---|---|---|---|---|---|---|---|---|---|---|---|---|---|---|---|---|
| | Sol 1 (5nm) | Sol 2 (75 nm) | Sol 3 (190 nm) | Sol 4 (20nm) | Sol 1 (5nm) | Sol 2 (75 nm) | Sol 3 (190 nm) | Sol 4 (20nm) | Sol 1 (5nm) | Sol 2 (75 nm) | Sol 3 (190 nm) | Sol 4 (20nm) | | Sol 1 (5nm) | Sol 2 (75 nm) | Sol 3 (190 nm) | Sol 4 (20nm) |
| Ex 1 | 28.64 | 6 | 0 | 0 | 400 | 400 | 0 | 0 | 4.09 | 13.69 | 0 | 0 | 2 | 23 | 27 | 0 | 0 |
| Ex 2 | 28.64 | 6 | 0 | 0 | 400 | 400 | 0 | 0 | 4.34 | 14.54 | 0 | 0 | 1.5 | 23 | 27 | 0 | 0 |
| Ex 3 | 28.64 | 6 | 0 | 0 | 400 | 400 | 0 | 0 | 4.6 | 15.4 | 0 | 0 | 1 | 23 | 27 | 0 | 0 |
| Ex 4 | 28.64 | 6 | 0 | 0 | 400 | 400 | 0 | 0 | 9.44 | 9.44 | 0 | 0 | 1.5 | 50 | 50 | 0 | 0 |
| Ex 5 | 28.64 | 6 | 0 | 0 | 400 | 400 | 0 | 0 | 2.83 | 16.05 | 0 | 0 | 1.5 | 15 | 85 | 0 | 0 |
| Ex 6 | 28.64 | 6 | 0 | 0 | 400 | 400 | 0 | 0 | 1.89 | 17 | 0 | 0 | 1.5 | 10 | 90 | 0 | 0 |
| Ex 7 | 28.64 | 6 | 0 | 0 | 400 | 400 | 0 | 0 | 4.34 | 14.45 | 0 | 0 | 1.5 | 23 | 27 | 0 | 0 |
| Ex 8 | 0 | 6 | 4.74 | 0 | 0 | 400 | 400 | 0 | 0 | 3.11 | 12.44 | 0 | 3 | 0 | 20 | 80 | 0 |
| Ex 9 | 0 | 6 | 4.74 | 0 | 0 | 400 | 400 | 0 | 0 | 6.22 | 9.33 | 0 | 3 | 0 | 40 | 60 | 0 |
| Ex 10 | 0 | 6 | 4.74 | 0 | 0 | 400 | 400 | 0 | 0 | 7.78 | 7.78 | 0 | 3 | 0 | 50 | 50 | 0 |
| Ex 11 | 0 | 6 | 4.74 | 0 | 0 | 400 | 400 | 0 | 0 | 7.78 | 7.78 | 0 | 3 | 0 | 50 | 50 | 0 |
| Ex 12 | 0 | 6 | 4.74 | 0 | 0 | 400 | 400 | 0 | 0 | 8.33 | 8.33 | 0 | 2.5 | 0 | 50 | 50 | 0 |
| Ex 13 | 0 | 6 | 4.74 | 0 | 0 | 400 | 400 | 0 | 0 | 8.33 | 8.33 | 0 | 2.5 | 0 | 50 | 50 | 0 |
| Ex 14 | 0 | 6 | 4.74 | 0 | 0 | 400 | 400 | 0 | 0 | 8.89 | 8.89 | 0 | 2 | 0 | 50 | 50 | 0 |
| Ex 15 | 0 | 6 | 4.74 | 0 | 0 | 400 | 400 | 0 | 0 | 4.09 | 23 | 0 | 2 | 0 | 50 | 50 | 0 |
| Ex 16 | 28.64 | 0 | 4.74 | 25.3 | 400 | 0 | 400 | 400 | 3.56 | 0 | 3.56 | 10.67 | 2 | 20 | 0 | 60 | 20 |
| Ex 17 | 0 | 6 | 4.74 | 0 | 0 | 400 | 400 | 0 | 0 | 9.33 | 6.22 | 0 | 3 | 0 | 60 | 40 | 0 |
| Ex 18 | 0 | 6 | 4.74 | 0 | 0 | 400 | 400 | 0 | 0 | 12.44 | 3.11 | 0 | 3 | 0 | 80 | 20 | 0 |

The pencil hardness of the Examples 2-18 hardcoats were determined as described in Example 1. The results are shown in Table 1, above. The transmittance haze value of the Examples 2-18 hardcoats were measured as described in Example 1. The results are shown in Table 1, above. The hardcoats of Examples 5, 6, and 14-18 appeared visually to have a hazy appearance.

### Comparative Example 1

The as-received (bare) PMMA sheet ("ACRYLITE-L") cut to 100 mm x 53 mm x 2 mm. The pencil hardness of the Comparative Example 1 hardcoat was determined as described in Example 1. The results are shown in Table 3, below. The transmittance (TT) and the transmittance haze values of the Comparative Example 1 hardcoat were measured as described in Example 1. The results are shown in Table 3, below.

**Table 3**

| | Thickness of Hardcoat, micrometer | Meyer Rod Used | Pencil Hardness of Hardcoat | | Transmittance of Hardcoat TT, % | Haze of Hardcoat, % |
|---|---|---|---|---|---|---|
| | | | Using 500g Load | Using 750g Load | | |
| CEx. 1 | | | 2H | 2H | 92.8 | 0.08 |
| CEx. 2 | 3.66 | #4 | 3H | - | - | - |
| CEx. 3 | 3.66 | #4 | 5H | - | - | - |
| CEx. 4 | 3.66 | #4 | >6H | - | - | - |
| CEx. 5 | 3.66 | #4 | >6H | - | - | - |
| CEx. 6 | 9.14 | #10 | 8H | - | - | - |
| CEx. 7 | 9.14 | #10 | 8H | - | - | - |
| CEx. 8 | 14.63 | #16 | 8H | - | - | - |
| CEx. 9 | 3.66 | #4 | 5H | - | - | - |
| CEx. 10 | 3.66 | #4 | 5H | - | - | - |
| CEx. 11 | 3.66 | #4 | >6H | - | 88.1 | 26.2 |
| CEx. 12 | 9.14 | #10 | 8H | 8H | 92.8 | 0.12 |
| CEx. 13 | 14.63 | #16 | 8H | - | - | - |
| CEx. 14 | 14.63 | #16 | 5H | - | - | - |
| CEx. 15 | 14.63 | #16 | >6H | - | 77.1 | 71.1 |
| CEx. 16 | 3.66 | #4 | 5H | - | 93.3 | 0.95 |
| CEx. 17 | 3.66 | #4 | 5H | - | 93.3 | 0.47 |
| CEx. 18 | 3.66 | #4 | 5H | - | 93.2 | 0.4 |
| CEx. 19 | 3.66 | #4 | 5H | - | 94.5 | 1.42 |
| CEx. 20 | 3.66 | #4 | 5H | - | 84.9 | 74.8 |

### Comparative Example 2

25.25 grams of 3-methacryloxypropyl-trimethoxysilane ("SILQUEST A174") and 0.5 gram of 4-hydroxy-2,2,6,6-tetramethylpiperidine 1-oxyl (5 wt.%; "PROSTAB") was added to 450 grams of 1-methoxy-2-propanol, which was in turn added to 400 grams of SiO₂ sol (20 nm; diameter; obtained under the trade designation "NALCO 2327" from Nalco Company) in glass jar with stirring at room temperature for 10 minutes. The jar was sealed and placed in an oven at 80°C for 16 hours. The water was removed from the resulting solution with a rotary evaporator at 60°C until the solid wt.% of the solution became close to 45 wt.%. 200 grams of 1-methoxy-2-propanol was charged into the resulting solution, and then remaining water removed by using the rotary evaporator at 60°C. This latter step was repeated for a second time to further remove water from the solution. The concentration of SiO₂ nanoparticles was adjusted to 45 wt.% by adding 1-methoxy-2-propanol. This sol is referred to as Sol 4 in this application.

400 grams of the 20 nm SiO₂ sol was mixed with 5 grams of pentraerythritol pentaacrylate ("SR399") and 0.1 gram of 1-hydroxy-cyclohexyl-phenyl-ketone ("IRGACURE 184"), then adjusted to 40 wt.% in solid by adding 1-methoxy-2-propanol to give a hardcoat precursor (solution).

A PMMA sheet ("ACRYLITE-L") 100 mm x 53 mm x 2 mm was fixed on a stainless steel table with level adjustment, and then the hardcoat precursor was coated on the PMMA sheet by bar coating with Meyer Rod # 4. After drying at room temperature for 15 minutes, the dried sample was placed in box purged by nitrogen under oxygen concentration of 50 ppm, then irradiated by UV (253.7 nm) light for 15 minutes . using a 25 watt gemicidal lamp (obtained under the trade designation "GERMICIDAL LAMP- G25T8" from Sankyo Denki)

The pencil hardness and the optical performance were determined as described above. The results are shown in Table 3, above.

### Comparative Examples 3-20

Comparative Examples 3-20 were prepared as described for Comparative Example 2 except that materials used, material ratios were varied as shown in Table 4 (below), and Meyer rods described in Table 3 (above) were used, respectively. One of the polyester acrylate oligomer resins used was obtained under the trade designation "CN2304" from Sartomer Company.

**Table 4**

| | Material | | | | SiO₂ | | Binder | |
|---|---|---|---|---|---|---|---|---|
| | Weight of "SILQUEST A174" Material added to Sol, g | Weight of SiO₂ Sol added, g | Weight of Sol in Hardcoat Precursor | Weight of Binder "SR399" in Hardcoat Precursor, g | Size, nm | Amount, wt.% | Resin | Amount, wt.% |
| CEx. 1 | - | - | | - | - | - | - | - |
| CEx. 2 | 25.25 | 400 | 11.11 | 5 | 20 | 50 | "SR399" | 50.0 |
| CEx. 3 | 25.25 | 400 | 16.67 | 2.5 | 20 | 75 | "SR399" | 25.0 |
| CEx. 4 | 25.25 | 400 | 17.78 | 2 | 20 | 80 | "SR399" | 20.0 |
| CEx. 5 | 25.25 | 400 | 18.89 | 1.5 | 20 | 85 | "SR399" | 15.0 |
| CEx. 6 | 25.25 | 400 | 11.11 | 5 | 20 | 50 | "SR399 | 50.0 |
| CEx. 7 | 25.25 | 400 | 16.67 | 2.5 | 20 | 75 | "SR399" | 25.0 |
| CEx. 8 | 25.25 | 400 | 11.11 | 5 | 20 | 50 | "SR399" | 50.0 |
| CEx. 9 | 5.95 | 400 | 11.11 | 5 | 75 | 50 | "SR399" | 50.0 |
| CEx. 10 | 5.95 | 400 | 16.67 | 2.5 | 75 | 75 | "SR399" | 25.0 |
| CEx. 11 | 5.95 | 400 | 18.89 | 1.5 | 75 | 85 | "SR399" | 15.0 |
| CEx. 12 | 5.95 | 400 | 11.11 | 5 | 75 | 50 | "SR399" | 50.0 |
| CEx. 13 | 5.95 | 400 | 11.11 | 5 | 75 | 50 | "SR399" | 50.0 |
| CEx. 14 | 5.95 | 400 | 11.11 | 5 | 75 | 50 | "CN2304" | 50.0 |
| CEx. 15 | 5.95 | 400 | 18.89 | 1.5 | 75 | 85 | "SR399" | 15.0 |
| CEx. 16 | 4.74 | 400 | 4.44 | 8 | 190 | 20 | "SR399" | 80.0 |
| CEx. 17 | 4.74 | 400 | 8.89 | 6 | 190 | 40 | "SR399" | 60.0 |
| CEx. 18 | 4.74 | 400 | 13.33 | 4 | 190 | 60 | "SR399" | 40.0 |
| CEx. 19 | 4.74 | 400 | 15.56 | 3 | 190 | 70 | "SR399" | 30.0 |
| CEx. 20 | 4.74 | 400 | 17.78 | 2 | 190 | 80 | "SR399" | 20.0 |

The pencil hardness of the Comparative Examples 3-20 hardcoats were determined as described in Example 1. The results are shown in Table 2, above. The hardcoats of Comparative Examples 4, 5, 10, 11, 15, and 20 appeared visually to have a hazy appearance. The transmittance (TT) and the transmittance haze values of the Comparative Examples 11-12 and 15-20 hardcoats were measured as described in Example 1. The results are shown in Table 3, above.

### Preparation of Formulations 1-11

Formulations 1-11 were prepared as described above for Example 1, except that the materials used, material ratios were varied as described in Table 5a. Then formulations were coated using a Meyer Rod, and Meyer Rods were varied as described in Table 5b, below. Formulations 2-4 and 6-11 were used for Examples 19-39 and the Formulations 1 and 5 were used for Comparative Examples 21-24.

**Table 5a**

| | Meyer Rod | Formulation No. | Functionalized SiO₂ (wt %) | | | SR399 (wt%) | IRGACURE 184 (wt%) |
|---|---|---|---|---|---|---|---|
| | | | "Sol 4" 20 nm | "Sol 2" 75 nm | "Sol 3" 190 nm | | |
| CEx. 21 | #4 | 1 | 0 | 75 | 0 | 25 | 1 |
| CEx. 22 | #10 | | | | | | |
| Ex. 19 | #4 | 2 | 15 | 60 | 0 | 25 | 1 |
| Ex. 20 | #7 | | | | | | |
| Ex. 21 | #10 | | | | | | |
| Ex. 22 | #4 | 3 | 26.25 | 48.75 | 0 | 25 | 1 |
| Ex. 23 | #7 | | | | | | |
| Ex. 24 | #10 | | | | | | |
| Ex. 25 | #4 | 4 | 37.5 | 37.5 | 0 | 25 | 1 |
| Ex. 26 | #10 | | | | | | |
| CEx. 23 | #4 | 5 | 0 | 80 | 0 | 20 | 1 |
| CEx. 24 | #10 | | | | | | |
| Ex. 27 | #4 | 6 | 16 | 64 | 0 | 20 | 1 |
| Ex. 28 | #10 | | | | | | |
| Ex. 29 | #4 | 7 | 28 | 52 | 0 | 20 | 1 |
| Ex. 30 | #10 | | | | | | |
| Ex. 31 | #4 | 8 | 40 | 40 | 0 | 20 | 1 |
| Ex. 32 | #10 | | | | | | |
| Ex. 33 | #7 | 9 | 18.75 | 0 | 56.25 | 25 | 1 |
| Ex. 34 | #10 | | | | | | |
| Ex. 35 | #7 | 10 | 0 | 30 | 45 | 25 | 1 |
| Ex. 36 | #10 | | | | | | |
| Ex. 37 | #4 | 11 | 20 | 0 | 60 | 20 | 1 |
| Ex. 38 | #7 | | | | | | |
| Ex. 39 | #10 | | | | | | |

**Table 5b**

| | Pencil Hardness | Optical Properties | | | |
|---|---|---|---|---|---|
| | | Haze | TT | DF | PT |
| CEx. 21 | - | 36.22 | 92.0 | 33.34 | 58.7 |
| CEx. 22 | - | 67.76 | 88.9 | 60.22 | 28.7 |
| Ex. 19 | 5H | 0.38 | 93.0 | 0.35 | 92.7 |
| Ex. 20 | 6H | 0.38 | 92.7 | 0.35 | 92.4 |
| Ex. 21 | 6H | 0.36 | 93.0 | 0.34 | 92.6 |
| Ex. 22 | 6H | 0.22 | 92.9 | 0.21 | 92.7 |
| Ex. 23 | 7H | 0.18 | 92.7 | 0.16 | 92.6 |
| Ex. 24 | 7H | 0.19 | 92.7 | 0.17 | 92.5 |
| Ex. 25 | 5H | 0.17 | 92.9 | 0.15 | 92.7 |
| Ex. 26 | 6H | 0.18 | 92.8 | 0.17 | 92.7 |
| CEx. 23 | - | 54.91 | 89.9 | 49.36 | 40.5 |
| CEx. 24 | - | 81.67 | 84.4 | 68.91 | 15.5 |
| Ex. 27 | - | 27.87 | 91.1 | 25.39 | 65.7 |
| Ex. 28 | - | 58.66 | 89.2 | 52.34 | 36.9 |
| Ex. 29 | 5H | 0.30 | 93.5 | 0.28 | 92.8 |
| Ex. 30 | 6H | 1.06 | 93.1 | 0.99 | 92.1 |
| Ex. 31 | 4H | 0.27 | 93.1 | 0.25 | 92.8 |
| Ex. 32 | 6H | 0.25 | 93.0 | 0.24 | 92.8 |
| Ex. 33 | 6H | 0.31 | 91.7 | 0.28 | 91.5 |
| Ex. 34 | 6H | 0.41 | 91.6 | 0.37 | 91.2 |
| Ex. 35 | 6H | 1.45 | 93.2 | 1.35 | 91.8 |
| Ex. 36 | 6H | 1.50 | 93.0 | 1.40 | 91.7 |
| Ex. 37 | 5H | 0.31 | 92.2 | 0.28 | 91.9 |
| Ex. 38 | 6H | 0.28 | 92.0 | 0.26 | 91.7 |
| Ex. 39 | 6H | 0.37 | 91.9 | 0.34 | 91.6 |

### Examples 19-39

Formulations 2-4 and 6-11 were used for Examples 19-39. Pencil hardness and optical properties were determined and the results are shown in Table 5b, above.

### Comparative Examples 21-24

The obtained Formulations 1 and 5 were used for Comparative Examples 21-24. Pencil hardness and optical properties were determined and the results are shown in Table 5b, above.

In addition, Example 24a was a repeat of Example 24 under thermal cure conditions using essentially the same process as Example 24 except as follows: The 20 nm ("Sol 4") and 75 nm ("Sol 2") of functionalized SiO₂ nanoparticle sols at a ratio of 35:65 (20 nm:75 nm) was mixed with acrylic monomer or oligomer as shown on Table 5a, for Formulation 3 without the photoinitiator, and then 2 wt.% of (benzoyl peroxide (obtained under the trade designation "NYPER BW" from NOF Corporation, Tokyo, Japan), and 0.01 wt.% of polyether modified silicone containing acrylatel-methoxy-2-propanol (obtained under the trade designation "BYK 3500" from BYK Chemical, Tokyo, Japan) was added into the solution. The solution was adjusted to 50 wt.% solids weight by adding 1-methoxy-2-propanol. Finally, the resulting hardcoat solution after mixing was passed through a 1 micrometer of glass syringe filter.

Then protective films were removed from polycarbonate substrates ("NF-2000", obtained from Mitsubishi Gas Chemical, Tokyo, Japan) under negative ion treatment utilizing air ionizer to eliminate static electricity. The substrate was then fixed on a paper lined leveled table and coated with the hardcoat coating solution using a Meyer Rod #10. After drying at 60°C for 5 minutes, the substrate was placed in an oven and heated at 100°C for 30 minutes in air. The coating sample was cured without cracks and the pencil hardness (750 grams) of the sample was determined to be "F".

### Examples 40-50 and Comparative Examples 25-40

Polycarbonate substrates ("NF-2000"), 100 mm x 53 mm in size and 1 mm thick was used as a substrate. Functionalized silica sols "Sol 4" (20 nm) and "Sol 2" (75 nm) were used as SiO₂ sols. Hardcoat materials were fabricated with changing their thickness and resin formulation.

Example 40 was prepared as follows. 25.25 grams of 3-methacryloxypropyl-trimethoxysilane ("SILQUEST A174"), and 0.5 gram of 4-hydroxy-2,2,6,6-tetramethylpiperidine 1-oxyl (5 wt.% "PROSTAB") was added to 450 grams of 1-methoxy-2-propanol (obtained from Alfa Aesar, Ward Hill, MA), which was added to 400 grams of 20 nm diameter SiO₂ sol ("NALCO 2327") in a glass jar with stirring at room temperature for 10 minutes. 5.95 grams of 3-methacryloxypropyl-trimethoxysilane ("SILQUEST A174") and 450 grams of 1-methoxy-2-propanol (obtained from Alfa Aesar, Ward Hill, MA) was added to 75 nm diameter SiO₂ sol ("NALCO 2329") in a glass jar with stirring at room temperature for 10 minutes. Each jar was sealed and placed in an oven at 80°C for 16 hours. The water was removed from the resulting solutions using a rotary evaporator at 60°C until their solid wt.% was close to 45 wt.%. 200 grams of 1-methoxy-2-propanol was charged into the resulting solution, and then remaining water was removed by evaporation from the solution at 60°C until the solid wt.% was close to 45 wt.%. This water removal process was repeated twice. The concentration of SiO₂ nanoparticle was adjusted to 45 wt.% by adding 1-methoxy-2-propanol. The SiO₂ sol modified by 3-methacryloxypropyl-trimethoxysilane ("SILQUEST A174") was mixed with dipentaerythritol pentaacrylate ("SR399") and then 0.1 gram of 1-hydroxy-cyclohexyl-phenyl-ketone ("IRGACURE 184") (equivalent to 1 wt.% based on the total weight of the formulation) added into the solution. The proportion of the components are summarized in Table 6, below. Finally, the solution was adjusted to 50 wt.% of solid by adding of 1-methoxy-2-propanol.

The 1 mm thick polycarbonate substrate was fixed on a leveled stainless steel table, and then the precursor solution was coated on the substrate by Meyer Rod # 4. After drying at room temperature, the substrate was placed in a box purged by nitrogen under oxygen concentration of 50 ppm. Finally, the coating was irradiated with a UV Source at 253.7 nm for 15 minutes using a 25 watt gemicidal lamp (obtained under the trade designation "GERMICIDAL LAMP- G25T8" from Sankyo Denki).

Examples 41-50 and Comparative Examples 25-40 were prepared as described for Example 40, except for the differences in formulation and Meyer Rod used was varied as listed in Table 6, below. Table 6 also summarizes the test data for each of Examples 40-50 and Comparative Examples 25-40.

**Table 6**

| | Sample No. | SiO₂ (75wt%) | | Resin (25wt%) | | Initiator | Meyers Rod | Optical Properties | | | | Cross Cut |
|---|---|---|---|---|---|---|---|---|---|---|---|---|
| | | Ratio (20nm:75nm) | | Ratio (SR399:SR340) | | | | | | | | |
| | | "Sol 4" 20nm | "Sol 2" 75nm | SR399 | SR340 | | | Haz e | TT | DF | PT | |
| Ex. 40 | 1 | 26.25 | 48.75 | 25 | 0 | IRGACURE 184 | #4 | 0.26 | 91.09 | 0.2 4 | 90.85 | 25/25 |
| Ex. 41 | 2 | | | 24.75 | 0.25 | | | 0.26 | 91.09 | 0.2 4 | 90.85 | 25/25 |
| Ex. 42 | 3 | | | 23.75 | 1.25 | | | 0.30 | 91.14 | 0.2 7 | 90.86 | 25/25 |
| Ex. 43 | 4 | | | 22.5 | 2.5 | | | 0.29 | 91.16 | 0.2 6 | 90.90 | 25/25 |
| Ex. 44 | 5 | | | 20 | 5 | | | 0.45 | 91.24 | 0.4 1 | 90.83 | 25/25 |
| CEx. 25 | 6 | | | 15 | 10 | | | 0.67 | 91.41 | 0.6 1 | 90.80 | 25/25 |
| CEx. 26 | 7 | | | 10 | 15 | | | 0.76 | 91.34 | 0.6 9 | 90.65 | 25/25 |
| CEx. 27 | 8 | | | 5 | 20 | | | 3.67 | 91.02 | 3.3 4 | 87.68 | 25/25 |
| CEx. 28 | 9 | | | 0 | 25 | | | 0.53 | 91.54 | 0.4 8 | 91.06 | 25/25 |
| CEx. 29 | 10 | | | 25 | 0 | | #7 | 0.33 | 91.11 | 0.3 0 | 90.81 | 0/25 |
| CEx. 30 | 11 | | | 24.75 | 0.25 | | | 0.31 | 91.11 | 0.2 9 | 90.83 | 20/25 |
| Ex. 45 | 12 | | | 23.75 | 1.25 | | | 0.36 | 91.03 | 0.3 3 | 90.70 | 25/25 |
| Ex. 46 | 13 | | | 22.5 | 2.5 | | | 0.37 | 91.08 | 0.3 4 | 90.74 | 25/25 |
| Ex. 47 | 14 | | | 20 | 5 | | | 0.34 | 91.20 | 0.3 1 | 90.89 | 25/25 |
| CEx. 31 | 15 | | | 15 | 10 | | | 0.57 | 91.35 | 0.5 2 | 90.8 3 | 25/25 |
| CEx. 32 | 16 | | | 10 | 15 | | | 0.88 | 91.14 | 0.8 0 | 90.34 | 25/25 |
| CEx. 33 | 17 | | | 5 | 20 | | | 8.52 | 90.4 3 | 7.7 0 | 82.73 | 25/25 |
| CEx. 34 | 18 | | | 0 | 25 | | | 0.67 | 91.29 | 0.6 1 | 90.68 | 25/25 |
| CEx. 35 | 19 | | | 25 | 0 | | #10 | 0.35 | 91.04 | 0.3 2 | 90.72 | 0/25 |
| CEx. 36 | 20 | | | 24.75 | 0.25 | | | 0.38 | 91.01 | 0.3 4 | 90.67 | 0/25 |
| Ex. 48 | 21 | | | 23.75 | 1.25 | | | 0.39 | 91.01 | 0.3 6 | 90.65 | 25/25 |
| Ex. 49 | 22 | | | 22.5 | 2.5 | | | 0.40 | 91.05 | 0.3 6 | 90.69 | 25/25 |
| Ex. 50 | 23 | | | 20 | 5 | | | 0.50 | 91.35 | 0.4 6 | 90.89 | 25/25 |
| CEx. 37 | 24 | | | 15 | 10 | | | 1.28 | 91.12 | 1.1 7 | 89.95 | 25/25 |
| CEx. 38 | 25 | | | 10 | 15 | | | 4.05 | 90.93 | 3.6 8 | 87.25 | 25/25 |
| CEx. 39 | 26 | | | 5 | 20 | | | 4.34 | 91.06 | 3.9 5 | 87.11 | 25/25 |
| CEx. 40 | 27 | | | 0 | 25 | | | 0.78 | 91.47 | 0.7 2 | 90.75 | 25/25 |

### Examples 51-64

Example 51 was prepared by adding to a mixture of functionalized SiO₂ nanoparticle sols. "Sol 4" and "Sol 2" (at a ratio of 35:65, respectively), " SR 399", and then 2 wt.% of 1-[4-(2-Hydroxyethoxy)-phenyl]-2-hydroxy-2-methyl-1-propane-1-one (obtained under the trade designation "IRGACURE 2959" Ciba Specialty Chemicals) added into the solution. Finally, the resulting hardcoat solution was passed through a 1 micrometer of glass syringe filter.

Examples 52-64 coating compositions were prepared as described for Example 51, except for the differences in formulation as listed in Table 7, below.

**Table 7**

| Material | SiO₂ nanoparticle | | Acrylic Monomer or Oligomer | | | | | | Initiator |
|---|---|---|---|---|---|---|---|---|---|
| Ratio wt% | 75 wt% | | 25 wt% | | | | | | 2 wt% |
| | "Sol 4" 20nm [wt%] | "Sol 2" 75nm [wt%] | Resin I | | [wt%] | Resin II | | [wt%] | - |
| Ex. 51 | 26.25 | 48.75 | SR399 | Dipentaerithrytol Penta-acrylate | 25.0 | - | - | - | |
| Ex. 52 | | | UX 5000 | Pentaerithritol Triacrylate/IPDI | 25.0 | - | - | - | |
| Ex. 53 | | | UV 1700B | Urethane Acrylate | 25.0 | - | - | - | |
| Ex. 54 | | | UV 6300B | Urethane Acrylate | 25.0 | - | - | - | |
| Ex. 55 | | | EB4858 | TMHDI/HEA | 25.0 | - | - | - | |
| Ex. 56 | | | R551 | PEO modified Bis-A diacrylate | 25.0 | - | - | - | |
| Ex. 57 | | | 3002M | PEO modified Bis-A epoxyacrylate | 25.0 | - | - | - | IRGACURE 2959 |
| Ex. 58 | | | SK-501M | Silane based UV carable resin | 25.0 | - | - | - | |
| Ex. 59 | | | R551 | PEO modified Bis-A diacrylate | 15.0 | EB4858 | TMHDI/HEA | 10.0 | |
| Ex. 60 | | | R551 | PEO modified Bis-A diacrylate | 22.5 | SR399 | Dipentaerithrytol Penta-acrylate | 2.5 | |
| Ex. 61 | | | R551 | PEO modified Bis-A diacrylate | 15.0 | UX 5000 | Pentaerithritol Triacrylate/IPDI | 10.0 | |
| Ex. 62 | | | EB4858 | TMHDI/HEA | 15.0 | R551 | PEO modified Bis-A diacrylate | 10.0 | |
| Ex. 63 | | | EB4858 | TMHDI/HEA | 20.0 | SR340 | 2-phenoxyethyl Methacrylate | 5.0 | |
| Ex. 64 | | | EB4858 | TMHDI/HEA | 22.5 | SR340 | 2-phenoxyethyl Methacrylate | 2.5 | |

The coating compositions Examples 51-64 prepared as shown on Table 7 were coated on 1 mm thick PMMA and polycarbonate substrates on a leveled stainless steel table by using Meyers Rod # 16. After drying for 15 minutes at room temperature, the substrates were placed in a box purged by nitrogen keeping the oxygen concentration below 50 ppm. The coatings were then irradiated with a UV light source as 253.7 nm for 15 minutes using a 25 watt gemicidal lamp (obtained under the trade designation "GERMICIDAL LAMP- G25T8" from Sankyo Denki).

Pencil hardness (750 grams), adhesive performance, bending performance and impact resistance of the coatings were determined by the procedures described above and reported in Table 8, below.

**Table 8**

| | Hardcoat | | | | Substrat e | Pencil Hardnes s | Cross cut | Bendin g | Impact Resistanc e |
|---|---|---|---|---|---|---|---|---|---|
| | Resin I | [wt% ] | Resin II | [wt% ] | | | | | |
| Ex. 51 | SR399 | 25 | - | - | PMMA | 8H | 25/25 | Crack | - |
| | | | | | PC | H | 25/25 | Crack | Crack |
| Ex. 52 | UX 5000 | 25.0 | - | - | PMMA | 8H | Peeling | Crack | - |
| | | | | | PC | 2H | Peeling | Crack | Crack |
| Ex. 53 | UV 1700B | 25.0 | - | - | PMMA | 9H | 25/25 | Crack | - |
| | | | | | PC | H | 25/25 | Crack | Crack |
| Ex. 54 | UV 6300B | 25.0 | - | - | PMMA | 9H | 25/25 | Crack | - |
| | | | | | PC | H | Peeling | Crack | Crack |
| Ex. 55 | EB4858 | 25.0 | - | - | PMMA | 8H | 25/25 | No crack | - |
| | | | | | PC | 2H | Peeling | No crack | No crack |
| Ex. 56 | R551 | 25.0 | - | - | PMMA | 6H | 25/25 | No crack | - |
| | | | | | PC | H | 25/25 | No crack | No crack |
| Ex. 57 | 3002M | 25.0 | - | - | PMMA | 4H | Peeling | Crack | - |
| | | | | | PC | H | Peeling | Crack | Crack |
| Ex. 58 | SK-501 M | 25.0 | - | - | PMMA | 6H | 25/25 | Crack | - |
| | | | | | PC | H | 25/25 | Crack | Crack |
| Ex. 59 | R551 | 15.0 | EB4858 | 10.0 | PMMA | 6H | Peeling | No crack | - |
| | | | | | PC | F | 25/25 | No crack | No crack |
| Ex. 60 | R551 | 22.5 | SR399 | 2.5 | PMMA | 6H | 25/25 | Crack | - |
| | | | | | PC | F | 25/25 | Crack | Crack |
| Ex. 61 | R551 | 15.0 | UX 5000 | 10.0 | PMMA | 8H | 25/25 | Crack | - |
| | | | | | PC | H | 25/25 | Crack | Crack |
| Ex. 62 | EB4858 | 15.0 | R551 | 10.0 | PMMA | 6H | 25/25 | No crack | - |
| | | | | | PC | HB | 25/25 | No crack | Crack |
| Ex. 63 | EB4858 | 20.0 | SR340 | 5.0 | PMMA | 6H | 25/25 | No crack | - |
| | | | | | PC | F | 25/25 | No crack | Crack |
| Ex. 64 | EB4858 | 22.5 | SR340 | 2.5 | PMMA | 8H | 25/25 | No crack | - |
| | | | | | PC | F | 25/25 | No crack | No crack |

### Example 65-68

6.13 grams of functional silica nanoparticle sol ("Sol 4", 20 nm , 42.8 wt.%) and 11.31 grams of functionalized silica nanoparticle sol ("Sol 2", 75 nm, 43.1 wt.%) at a weight ratio of 35:65, respectively, were mixed in a glass vessel, and then 2.25 grams of tri methyl hydroxyl di-isocyanate /hydroxyl ethyl acrylate ("EB4858"), 0.25 gram of 2-phenoxyethyl methacrylate ("SR340"), and 0.01 gram of UV-3500 leveling agent (10 wt.% in methoxypropanol) were added into the SiO₂ sol mixture The resulting solution was adjusted to 50 wt.% solids weight by adding of 0.05 gram of 1-methoxy-2-propanol. Subsequently, 0.2 gram of 1-hydroxy-cyclohexyl-phenyl-ketone ("IRGACURE 184") was added to this solution, which was mixed well until initiator dissolved into the solution. Finally, the resulting hardcoat solution was passed through a 1 micrometer of glass syringe filter.

Examples 66-68 were prepared as described for Example 65, except addition of 0.1 gram, 0.2 gram, and 0.4 gram for each of Examples 66-68, respectively, of hexafluoropropylene oxide (HFPO I) which included HFPO urethane acrylate (prepared using the processes described in U.S. Pat. Publ. No. 2008/0124555) and 25 % wt of a surfactant ("BRIJ S20", obtained from Sigma-Aldrich Chemical Company, St. Louis, MO) at 50 wt.% of solids in methyl ethyl ketone (MEK). (HFPO-I) was added into the solutions before addition of initiator.

The formulations of Examples 65-68 were then coated on 1 mm thick PMMA ("ACRYLITE-L") substrates using the same process described above and the properties of the coatings were determined are summarized in Table 9, below.

**Table 9**

| | Hardcoat | | Substrate | Meyer Rod/ Thickness | Pencil HD | | Cross cut | Optical properties | | Contact angle | |
|---|---|---|---|---|---|---|---|---|---|---|---|
| | Base | HFPO I | | | 750 g | 1 kg | | Haze | TT | Water | Hexadecan |
| Ex. 65 | EB4858 | 0.0 wt% | PMMA 1mm | #10 5.68µm | 8H | 7H | 25/25 | 0.39 | 92.9 | 81.3 | 22.3 |
| Ex. 66 | EB4858 | 0.5 wt% | PMMA 1mm | #10 5.68µm | 8H | 7H | 25/25 | 0.22 | 93.0 | 110.9 | 68.8 |
| Ex. 67 | EB4858 | 1.0 wt% | PMMA 1mm | #10 5.68µm | 8H | 6H | 25/25 | 0.32 | 92.9 | 111.2 | 69.6 |
| Ex. 68 | EB4858 | 2.0 wt% | PMMA 1mm | #10 5.68µm | 6H | 6H | 25/25 | 0.25 | 93.0 | 110.7 | 69.6 |

### Example 69

A mixture of functionalized SiO₂ nanoparticle sols ("Sol 4" and "Sol 2" at a weight ratio of ratio of 35:65, respectively) was mixed with acrylic oligomer "EB4858", and then 2 wt.% of "IRGACURE 184", 0.01 wt.% of UV 3500 leveling agent, were added into the solution. The obtained solutions were adjusted to 50 wt.% solids weight by adding 1-methoxy-2-propanol. Finally, the obtained hardcoat solution were filtered through a 1 micrometer of glass syringe filter.

The above prepared coating solution was then coated on a 1 mm thick PMMA ("ACRYLITE-L") substrate on a leveled stainless steel table by using a Meyer Rod #16. After drying at 65°C for 5minutes, and the coatings cured using Light-Hammer 6UV (obtained from Fusion UV System Inc., Gaithersburg, MD) processer equipped with an H-bulb, operating under nitrogen atmosphere at 100% lamp power at a line speed of 9.14 meters/minute 3 times (3 passes). Contact angle, optical property and pencil hardness were detected and shown in Table 10a, below.

**Table 10a**

| | | Additive | | Contact angle | | Optical property | | Pencil Hardness |
|---|---|---|---|---|---|---|---|---|
| | Base | | [wt%] | water | hexadecane | T T | Haze | 750g |
| Ex. 69 | EB4858 | - | 0.0 | 73.3 | 29.5 | 94.0 | 0.25 | 8H |
| Ex. 70 | EB4858 | HFPO-I | 0.1 | 103.5 | 69.9 | 93.8 | 0.22 | 8H |
| Ex. 71 | EB4858 | - | 0.1 | 110.9 | 63.5 | 94 | 0.22 | 8H |
| Ex. 72 | SR399 | - | 0.0 | 78.3 | 18.2 | 94.0 | 0.13 | 8H |
| Ex. 73 | SR399 | HFPO-I | 0.1 | 105.3 | 73.8 | 94.0 | 0.21 | 8H |
| Ex. 74 | SR399 | HFPO-II | 0.1 | 112.8 | 68.1 | 93.9 | 0.17 | 8H |
| Ex. 75 | SR399 | HFPO-III | 0.5 | 104.3 | 74.8 | 93.9 | 0.41 | 8H |

**Table 10 b**

| | | Additive | | | | Haze | | |
|---|---|---|---|---|---|---|---|---|
| | Base | | [wt%] | | [wt%] | initial | after test | H |
| Ex. 76 | SR399 | HFPO-II | 0.1 | - | - | 0.17 | 34 | 33.83 |
| Ex. 77 | SR399 | HFPO-III | 0.1 | - | - | 0.41 | 28.6 | 28.19 |
| Ex. 78 | SR399 | HFPO-II | 0.1 | TEGORAD | 0.1 | 0.74 | 10.5 | 9.76 |

### Examples 70-75

Samples were prepared in the same manner as Example 69, except that the base resins and additives listed in Table 10a (above) were used. Contact angle, optical property, and pencil hardness of the coatings were determined as described above and are reported in Table 10a, above. As used herein, HFPO-I refers HFPO urethane acrylate with "BRIJ S20" surfactant (50 wt.% of solids in MEK, HFPO-II refers to urethane acrylate (30 wt.% of solids in MEK, and was prepared using the processes described in and teachings of, for example, U.S. Pat. No. 7,718,264), and HFPO-III refers HFPO-PEG copolymer (25 wt.% of solids in MEK, and was prepared using the processes described in and teachings of, for example, U.S. Pat. Publ. No. 2010/310875).

### Examples 76-78

Samples for Examples 74 and 75 were used for Examples 76 and 77, respectively. Sample for Example 78 was prepared in the same manner as described for Example 76 except that a silicone polyether acrylate (obtained under the trade designation "TEGORAD 2250" from Evonic Goldschmidt GmbH, Essen, Germany) was added as listed in Table 10b, above. Haze value of the coating was determined before and after the cellulose haze test and are reported in Table 10b, above.

### Examples 79-90

### Preparation of Formulation A

88.3 grams of "Sol 4" (20 nm,44.6 wt.%) and 147.8 grams of "Sol 2" (75 nm,49.5 wt.%) of functionalized SiO₂ nanoparticle sols were mixed in a glass vessel, and then 33.75 grams of tri methyl hydroxyl di-isocyanate /hydroxyl ethyl acrylate: TMHDI/HEA ("EB 4858"), 3.75 grams of ("SR 340") and 0.15 gram of ("UV-3500") leveling agent (10 wt.% in methoxypropanol) were added into the SiO₂ sol mixture. The obtained solutions were adjusted to 50 wt% solids by adding of 26.2 grams of 1-methoxy-2-propanol. Subsequently, 3.0 grams of 1-[4-(2-Hydroxyethoxy)-phenyl]-2-hydroxy-2-methyl-1-propane-1-one; "IRGACURE" 2959") was added to the obtained solution, which was mixed well until initiator dissolved into the solution. Finally, the obtained hardcoat solution after mixing process, was filtered through a 1 micrometer of glass syringe filter. The obtained Formulation A was used for Examples 79-82.

### Preparation of Formulations B and C

Formulation B was made in the same manner as Formulation A, except "UX5000" was used instead of "EB4858". Formulation C was made in the same manner as Formulation A, except "SR399" was used instead of "EB4858". The obtained Formulations B and C were used for Examples 80-83 and Examples 84-87, respectively.

### Preparation of Samples

For Examples 80-82, 84-86, and 88-90, nickel coated acrylonitrile butadiene styrene copolymer (ABS) substrates (100 mm x 53 mm x 1 mm, obtained from Test Piece, Tokyo Japan) were mounted on a dipcoating head, and then immersed in a primer solution of 4298 UV (commercially available from 3M Company, St. Paul, MN) or N-200 primer solution (commercially available from 3M Company, St. Paul, MN) as summarized in Table 11. The substrate was raised up at 2.49 mm/second rate after 30 second of the immersion into primer solution. The primed substrates were then heated at 60°C for 5 minutes or 80°C for 10 minutes (as described in Table 11). Subsequently, the primed and dried substrates were mounted on a dipcoating head and then coated with the coating formulations. For Examples 79, 83, and 87, the ABS substrates were immersed into Formulations A, B and C respectively without priming the substrates. The coated substrates were raised up at 2.49 mm/sec rate after 30 seconds of the immersing. After drying at 60°C for 5 min or 80°C for 10 minutes, the substrate is placed in box purged by nitrogen under oxygen concentration of 50 ppm. Finally, both side of substrate were irradiated with a UV light source at 253.7 nm (268.43 mJ/cm³) for 5 minutes using a 25 Watt UV lamp ("GERMICIDAL LAMP" ModelG25T8). These processes were carried out in a Class 10000 clean room.

Adhesive performance, water resistance and environmental resistance were determined and the results are shown in Table 11, below.

**Table 11**

| | Preparation of Hardcoat | | | Primer | | | Cross cut | Water resistance | | | Environmental resistance |
|---|---|---|---|---|---|---|---|---|---|---|---|
| | Base | Dipcoating | Drying | Primer | Dipcoating | Drying | | Peeling | Whitening | Bubble | |
| Ex. 79 | Formulation A (EB4858) | 2.49 [mm/sec] Auto:600 | 60°C 5min | Without Primer | | | Peeled | Peeled | OK | OK | - |
| Ex. 80 | | | 60°C 5min | 4298 UV | 2.49 [mm/sec] Auto:600 | 60°C 5min | 25/25 | OK | White | Bubble | OK |
| Ex. 81 | | | 80°C 10min | 4298 UV | | 80°C 10min | 25/25 | OK | White | OK | OK |
| Ex. 82 | | | 80°C 10min | N-200 | | 80°C 10min | Peeled | Peeled | OK | OK | - |
| Ex. 83 | Formulation B (UX5000) | 2.49 [mm/sec] Auto:600 | 60°C 5min | Without Primer | | | Peeled | OK | OK | OK | - |
| Ex. 84 | | | 60°C 5min | 4298 UV | 2.49 [mm/sec] Auto:600 | 60°C 5min | 25/25 | OK | Slight | Slight | OK |
| Ex. 85 | | | 80°C 10min | 4298 UV | | 80°C 10min | 25/25 | OK | OK | OK | OK |
| Ex. 86 | | | 80°C 10min | N-200 | | 80°C 10min | Peeled | OK | OK | OK | - |
| Ex. 87 | Formulation C (SR399) | 2.49 [mm/sec] Auto:600 | 60°C 5min | Without Primer | | | Peeled | Peeled | OK | OK | - |
| Ex. 88 | | | 60°C 5min | 4298 UV | 2.49 [mm/sec] Auto:600 | 60°C 5min | 25/25 | OK | OK | OK | Crack |
| Ex. 89 | | | 80°C 10min | 4298 UV | | 80°C 10min | 25/25 | OK | OK | OK | Crack |
| Ex. 90 | | | 80°C 10min | N-200 | | 80°C 10min | Peeled | OK | OK | OK | - |

### Examples 91 and 92, and Comparative Example 41

Example 91 was prepared as follows. 5.85 grams of "Sol 4" (20 nm, 42.7 wt.%) and 10.62 grams of "Sol 2" (75 nm, 43.1 wt.%) of functionalized SiO₂ nanoparticle sols were mixed in a glass vessel, and then 0.95 gram of tri methyl hydroxyl di-isocyanate /hydroxyl ethyl acrylate: TMHDI/HEA ("EB4858"), 0.48 gram of 2-phenoxyethyl methacrylate ("SR340"), and 1.43 gram of polyoxyethylene alkenylether (obtained under trade designation "LATEMUL PD 430" from Kao Corporation, Tokyo, Japan) were added into the SiO₂ sol mixture. Subsequently, 0.5 gram of 1-[4-(2-Hydroxyethoxy)-phenyl]-2-hydroxy-2-methyl-1-propane-1-one (initiator, "IRGACURE 2959") was added to the obtained solution, which was mixed well until the initiator dissolved into the solution. Finally, the obtained hardcoat solution after mixing process was filtered through a 1 micrometer of glass syringe filter. Details of coating composition are summarized in Table 12a, below.

**Table 12 a**

| | (1) SiO₂ | (2) Oligomer | (3) Additive | wt% Ratio | Hard Coat |
|---|---|---|---|---|---|
| | wt% ratio | wt% ratio | | (1) / (2) / (3) | Thickness |
| CEx. 41 | 1.0mm Polycarbonate Plate | | | | - |
| Ex. 91 | "Sol 2" 75nm/"Sol 4" 20nm 65/35 | EB4858/SR340 67/33 | LATEMUL PD430 | 71.4/14.3/14.3 | 9 µm |
| Ex. 92 | | UX5000/SR340 67/33 | | | |

The polycarbonate substrate with a thickness of 1 mm was fixed on a leveled stainless steel table, and then the obtained hardcoat solution was coated on the substrate using a Meyers Rod. After drying for 15 minutes at room temperature, the substrate was placed in box purged by nitrogen with an oxygen concentration of 50 ppm. Finally, the coating was irradiated with a UV light source at 253 nm for 15 minutes using a 25 Watt gemicidal lamp (obtained under the trade designation "GERMICIDAL LAMP- G25T8" from Sankyo Denki). The hardcoat thickness after drying was about 9 micrometers.

Example 92 was prepared in the same manner for Example 91, except that an acrylic oligomer, pentaerithritol triacrylate/IPDI ("UX-5000"), was used.
Comparative Example 41 was a bare (without a hardcoat) polycarbonate substrate with thickness of 1 mm.
Anti-fogging performance, pencil hardness (at 750 grams load), and scratch resistance were determined and shown in Table 12b, below.

**Table 12 b**

| | Fogging Test | Pencil Hardness (750g) | Scratch Resistance | | | | | | | |
|---|---|---|---|---|---|---|---|---|---|---|
| | | | Initial (%) | | | | After sand fall (%) | | | |
| | | | Haze | TT | DF | PT | Haze | TT | DF | PT |
| CEx. 41 | No good | 6B | 0.26 | 89.89 | 0.24 | 89.65 | 47.24 | 82.55 | 39.00 | 43.55 |
| Ex. 91 | Good | 3B | 0.27 | 91.00 | 0.25 | 90.76 | 4.05 | 90.63 | 3.67 | 86.96 |
| Ex. 92 | Good | B | 0.33 | 91.01 | 0.30 | 90.72 | 9.97 | 90.92 | 9.06 | 81.86 |

### Examples 93 and 94, and Comparative Examples 42-45

Example 93 was prepared by as follows. 5.85 grams of "Sol 4" (20 nm, 42.7 wt.%) and 10.62 grams of "Sol 2" (75 nm,43.1 wt.%) of functionalized SiO₂ nanoparticle sols were mixed in glass vessel, and then 0.95 gram of tri methyl hydroxyl di-isocyanate /hydroxyl ethyl acrylate: TMHDI/HEA ("EB4858"), 1.43 gram of N-hydroxyethyl acrylamide, and 0.48 gram of polyoxyethylene alkenylether ("LATEMUL PD430") as an additives were added into the SiO₂ sol. Subsequently, 0.5 gram of 1-[4-(2-Hydroxyethoxy)-phenyl]-2-hydroxy-2-methyl-1-propane-1-one (initiator, "IRGACURE 2959") was added to the obtained solution, which was mixed well until the initiator dissolved into the solution. Finally, the hardcoat solution was filtered through a 1 micrometer of glass syringe filter. Details of ratio for components have been summarized in Table 13, below.

**Table 13**

| | (1) SiO₂ wt% ratio | (2) Oligomer wt% ratio | (3) Additive | | wt% Ratio (1)/(2)/(3) | Fogging Test |
|---|---|---|---|---|---|---|
| Ex. 93 | "Sol 2" 75nm/"Sol 4" 20nm 65/35 | EB4858/HEAA 40/60 | Latemul PD430 | Polyoxyethylene alkenylether | 71.4/23.8/4.8 | Good |
| CEx. 42 | | | Blemmer PP-800 | Polypropyleneglycol (n=13) monomethacrylate | | No Good |
| CEx. 43 | | | Blemmer AE-400 | Polyethyleneglycol (n=10) monoacrylate | | No Good |
| CEx. 44 | | | NK Ester A-1000 | Polyethyleneglycol (n=23) diacrylate | | No Good |
| CEx. 45 | | | NK Ester M-23G | Methoxy polyethyleneglycol (n=23) monomethacrylate | | No Good |
| Ex. 94 | | | Aquaron RN-30 | Polyoxyethylene nonylpropenylphenylether | | Good |

The hardcoat solution prepared above was coated on 50 micrometers thick polyester film (obtained under trade designation "ESTER FILM A-4100", from Toyobo, Osaka, Japan) with Meyer Rod #16. After drying in an oven at 60°C for 5 minutes, it was irradiated using a UV light source at 1500 mJ/cm² rate. The UV light source was obtained from Fusion UV System Inc. The resulting hardcoat was 9 micrometers thick.

A pressure sensitive adhesive (PSA) solution (obtained under trade designation "SK-1435", 30 wt.% solids acrylic pressure sensitive adhesive solution in toluene/ethylacetate from by Soken Chemical,) and 0.27 wt.% isocyanate crosslinker ("D-90" obtained from Soken Chemical, Tokyo, Japan) based on the PSA solid was mixed. The obtained solution was coated on the backside of the above prepared hardcoated polyester sheet by knife coating, then dried at 100°C for 10 minutes to give the hardcoated polyester adhesive sheet, which comprised 20 micrometers thick adhesive layer on one side of the polyester film and 9 micrometers thick hardcoat layer on another side.

Example 94, and Comparative Examples 42 to 45 were prepared in the same manner as for Example 93, except using the additives listed in Table 13, above.

The coated Polyester films of Examples 93, 94 and Comparative Examples 42-45 were applied on a 1 mm thick glass plate with a squeegee, then their anti-fogging performance were determined and shown in Table 13, above.

### Examples 95-97, and Comparative Examples 46-48

Example 95 was prepared as follows. 6.34 grams of polyester diacrylate (obtained under trade designation "ARONIX M-6100" from Toa-gosei, Tokyo, Japan), 3.42 grams of N-Hydroxyethyl acrylamide, and 0.24 grams of polyoxyethylene oleylether (HLB=13.6,obtained under trade designation "EMULGEN 420" from Kao Corporation, Tokyo, Japan) were added into a mixture of functionalized silica sols ("Sol 2" and "Sol 4" at 65:35 weight ratio). Subsequently, 0.5 gram of 1-[4-(2-Hydroxyethoxy)-phenyl]-2-hydroxy-2-methyl-1-propane-1-one (initiator, "IRGACURE 2959") was added to the obtained solution, which was mixed well until the initiator dissolves into the solution. Finally, the obtained solution after mixing process was filtered through a 1 micrometer of glass syringe filter. Details of coating composition of Example 95 is summarized in Table 14a, below.

**Table 14 a**

| | (1) SiO₂ wt% ratio | (2) Oligomer wt% ratio | (3) Additive | wt% Ratio (1)/(2)/(3) | Hard Coat Thickness |
|---|---|---|---|---|---|
| CEx. 46 | "TOYOBO ESTER FILM A4100" / PSA | | | | - |
| CEx. 47 | | AN6100/HEAA 65/35 | Emulgen 420 | 0/97.6/2.4 | 9 µm |
| CEx. 48 | "Sol 2" 75nm / "Sol 4" 20nm 65/35 | EB4858 | Latemul PD430 | 65.2/8.7/26.1 | 9 µm |
| Ex. 95 | | AN6100/HEAA 40/60 | Emulgen 420 | 71.4/23.8/4.8 | 9 µm |
| Ex. 96 | | UX5000/SR340 67/33 | Latemul PD430 | 71.4/14.3/14.3 | 6 µm |
| Ex. 97 | | EB4858/HEAA 40/60 | Aquaron RN-30 | 71.4/23.8/4.8 | 9 µm |

Then the obtained solution was coated in the same manner as for Example 93 to give the hardcoated polyester adhesive sheet. Examples 96 and 97 were prepared in the same manner for Example 93, except using the oligomers and the additives listed in Table 14a, below.

Comparative Examples 46 was prepared by as follows. A 50 micrometers thick polyester film ("ESTER FILM A-4100") was coated with the PSA solution prepared in Example 93 in the same manner. Comparative Example 46 did not include a hardcoat on the other side.

Comparative Example 47 was prepared in the same manner as Example 93 except that no SiO₂ was added to the hardcoat.

Comparative Example 48 was prepared by as follows. 5.34 gram of "Sol 4" (20 nm, 42.7 wt.%) and 9.70 grams of "Sol 2" (75 nm, 43.1 wt.%) of functionalized SiO₂ nanoparticle sols were mixed in a glass vessel, and then 0.87 gram of tri methyl hydroxyl di-isocyanate /hydroxyl ethyl acrylate: TMHDI/HEA ("EB4858"), and 2.61 grams of polyoxyethylene alkenylether ("LATEMUL PD430") as an additives were added into the SiO₂ sol. Subsequently, 0.5 gram of 1-[4-(2-Hydroxyethoxy)-phenyl]-2-hydroxy-2-methyl-1-propane-1-one (initiator, "IRGACURE 2959") was added to the obtained solution, which was mixed well until the initiator dissolved into the solution. Finally, the obtained hardcoat solution after mixing process was filtered through a 1 micrometer of glass syringe filter. Details of coating composition are summarized in Table 14b, below.

Each sample was applied on a 1 mm thick glass plate with a squeegee, and then anti-fogging performance, pencil hardness (750 grams), and scratch resistance were determined and shown in Table 14b, below.

**Table 14 b**

| | Fogging Test | Pencil Hardness (750g) | Scratch Resistance | | | | | | | |
|---|---|---|---|---|---|---|---|---|---|---|
| | | | Initial (%) | | | | After sand fall (%) | | | |
| | | | Haze | TT | DF | PT | Haze | TT | DF | PT |
| CEx. 46 | No Good | 4B | 0.33 | 89.80 | 0.30 | 89.50 | 50.80 | 83.11 | 42.22 | 40.89 |
| CEx. 47 | Good | 3B | 1.24 | 90.70 | 1.13 | 89.57 | 3.52 | 85.79 | 3.02 | 82.77 |
| CEx. 48 | Whitening | Not evaluated | | | | | | | | |
| Ex. 95 | Good | H | 0.69 | 90.97 | 0.63 | 90.34 | 10.09 | 90.15 | 9.10 | 81.05 |
| Ex. 96 | Good | F | 0.30 | 91.75 | 0.27 | 91.48 | 8.38 | 90.98 | 7.63 | 83.35 |
| Ex. 97 | Good | HB | 1.23 | 91.20 | 1.12 | 90.08 | 2.77 | 91.32 | 2.53 | 88.79 |

## Claims

1. A hardcoat comprising:
(i) a binder, and
(ii) a mixture of inorganic nanoparticles in a range from 60 wt. % to 90 wt. %, based on the total weight of the hardcoat, wherein 10 wt. % to 50 wt. % of the inorganic nanoparticles have an average particle diameter in a range from 2 nm to 200 nm and 50 wt. % to 90 wt. % of the inorganic nanoparticles have an average particle diameter in a range from 60 nm to 400 nm, and wherein the ratio of average particle diameters of inorganic nanoparticles having an average particle diameter in the range from 2 nm to 200 nm to average particle diameters of inorganic nanoparticles having an average particle diameter in the range from 60 nm to 400 nm is in a range from 1:2 to 1:200, wherein the mixture of inorganic nanoparticles includes a combination of particle sizes selected from the group consisting of 5 nm/190 nm, 5 nm/75 nm, 20 nm/190 nm, 20 nm/75 nm and 75 nm/190 nm and wherein the average particle diameter is determined with transmission electron microscopy as described herein.

2. The hardcoat according to claim 1, wherein the inorganic nanoparticles include modified inorganic nanoparticles.

3. The hardcoat according to any preceding claim, wherein the binder comprises hexafluoropropylene oxide urethane acrylate.

4. The hardcoat according to claim 3, wherein the binder further comprises silicone polyether acrylate.

5. The hardcoat according to any of claims 1 or 2, wherein the binder comprises 1.25 wt.% to 20 wt % in solid of 2-phenoxy ethyl methacrylate.

6. The hardcoat according to any of claims 1 or 2, wherein the binder comprises difunctional urethane acrylate.

7. The hardcoat according to any of claims 1 or 2, wherein the binder comprises polyethyleneglycol containing alkenyl ether.

8. An article comprising:
(i) a substrate having a surface, and
(ii) a hardcoat layer disposed on the surface of the substrate, wherein the hardcoat layer comprises the hardcoat according to any preceding claim.

9. The article according to claim 8, wherein the substrate is a film or a polymer plate.

10. The article according to claim 8, wherein the substrate is one of a film or a polymer plate.

11. The article according to either claim 9 or 10 further comprising a primer layer between the substrate and the hardcoat layer.

## Patentansprüche

1. Hardcoat, umfassend:
(i) ein Bindemittel und
(ii) eine Mischung aus anorganischen Nanoteilchen in einem Bereich von 60 Gew.-% bis 90 Gew.-%, bezogen auf das Gesamtgewicht des Hardcoats, wobei 10 Gew.-% bis 50 Gew.-% der anorganischen Nanoteilchen einen durchschnittlichen Teilchendurchmesser in einem Bereich von 2 nm bis 200 nm aufweisen und 50 Gew.-% bis 90 Gew.-% der anorganischen Nanoteilchen einen durchschnittlichen Teilchendurchmesser in einem Bereich von 60 nm bis 400 nm aufweisen, und wobei das Verhältnis der durchschnittlichen Teilchendurchmesser von anorganischen Nanoteilchen, die einen durchschnittlichen Teilchendurchmesser in einem Bereich von 2 nm bis 200 nm aufweisen, zu durchschnittlichen Teilchendurchmessern anorganischer Nanoteilchen, die einen durchschnittlichen Teilchendurchmesser in einem Bereich von 60 nm bis 400 nm aufweisen, in einem Bereich von 1:2 bis 1:200 liegt, wobei die Mischung aus anorganischen Nanoteilchen eine Kombination von Partikelgrößen einschließt, die ausgewählt ist aus der Gruppe bestehend aus 5 nm/190 nm, 5 nm/75 nm, 20 nm/190 nm, 20 nm/75 nm und 75 nm/190 nm, und wobei der durchschnittliche Teilchendurchmesser mit Transmissionselektronenmikroskopie bestimmt wird wie hierin beschrieben.

2. Hardcoat nach Anspruch 1, wobei die anorganischen Nanoteilchen modifizierte anorganische Nanoteilchen einschließen.

3. Hardcoat nach einem der vorangehenden Ansprüche, wobei das Bindemittel Hexafluorpropylenoxidurethanacrylat umfasst.

4. Hardcoat nach Anspruch 3, wobei das Bindemittel ferner Silikonpolyetheracrylat umfasst.

5. Hardcoat nach einem der Ansprüche 1 oder 2, wobei das Bindemittel umfasst: 1,25 Gew.-% bis 20 Gew.-% in Feststoff an 2-Phenoxyethylmethacrylat.

6. Hardcoat nach einem der Ansprüche 1 oder 2, wobei das Bindemittel difunktionelles Urethanacrylat umfasst.

7. Hardcoat nach einem der Ansprüche 1 oder 2, wobei das Bindemittel umfasst: Polyethylenglycol, das Alkenylether enthält.

8. Artikel, umfassend:
(i) ein Substrat mit einer ersten Oberfläche und
(ii) eine Hardcoat-Schicht, die auf der Oberfläche des Substrats angeordnet ist, wobei die Hardcoat- Schicht den Hardcoat nach einem der vorangehenden Ansprüche umfasst.

9. Artikel nach Anspruch 8, wobei das Substrat eine Folie oder eine Polymerplatte ist.

10. Artikel nach Anspruch 8, wobei das Substrat eines von einer Folie oder einer Polymerplatte ist.

11. Artikel nach einem der Ansprüche 9 oder 10, ferner eine Grundierungsschicht zwischen dem Substrat und der Hardcoat-Schicht umfassend.

## Revendications

1. Revêtement dur comprenant :
(i) un liant, et
(ii) un mélange de nanoparticules inorganiques dans une plage allant de 60 % en poids à 90 % en poids, sur la base du poids total du revêtement dur, dans lequel 10 % en poids à 50 % en poids des nanoparticules inorganiques ont un diamètre moyen de particule dans une plage allant de 2 nm à 200 nm et 50 % en poids à 90 % en poids des nanoparticules inorganiques ont un diamètre moyen de particule dans une plage allant de 60 nm à 400 nm, et dans lequel le rapport des diamètres moyens de particule des nanoparticules inorganiques ayant un diamètre moyen de particule dans la plage allant de 2 nm à 200 nm aux diamètres moyens de particule des nanoparticules inorganiques ayant un diamètre moyen de particule dans la plage allant de 60 nm à 400 nm est dans une plage de 1:2 à 1:200, dans lequel le mélange de nanoparticules inorganiques inclut une combinaison de tailles de particules choisies dans le groupe constitué de 5 nm/190 nm, 5 nm/75 nm, 20 nm/190 nm, 20 nm/75 nm et 75 nm/190 nm et dans lequel le diamètre moyen de particule est déterminé avec une microscopie électronique à transmission de la manière décrite ici.

2. Revêtement dur selon la revendication 1, dans lequel les nanoparticules inorganiques incluent des nanoparticules inorganiques modifiées.

3. Revêtement dur selon l'une quelconque revendication précédente, dans lequel le liant comprend de l'uréthane-acrylate d'oxyde d'hexafluoropropylène.

4. Revêtement dur selon la revendication 3, dans lequel le liant comprend en outre un acrylate de polyéther de silicone.

5. Revêtement dur selon l'une quelconque des revendications 1 ou 2, dans lequel le liant comprend 1,25 % en poids à 20 % en poids en solide de méthacrylate de 2-phénoxy-éthyle.

6. Revêtement dur selon l'une quelconque des revendications 1 ou 2, dans lequel le liant comprend de l'acrylate d'uréthane difonctionnel.

7. Revêtement dur selon l'une quelconque des revendications 1 ou 2, dans lequel le liant comprend un éther alcénylique contenant du polyéthylène glycol.

8. Article comprenant :
(i) un substrat ayant une surface, et
(ii) une couche de revêtement dur disposée sur la surface du substrat, dans lequel la couche de revêtement dur comprend le revêtement dur selon l'une quelconque revendication précédente.

9. Article selon la revendication 8, dans lequel le substrat est un film ou une plaque polymère.

10. Article selon la revendication 8, dans lequel le substrat est l'un parmi un film ou une plaque polymère.

11. Article selon l'une ou l'autre revendication 9 ou 10, comprenant en outre une couche d'apprêt entre le substrat et la couche de revêtement dur.
